(19) Europäisches Patentamt / European Patent Office / Office européen des brevets

(11) **EP 4 335 829 B1**

(12) **EUROPÄISCHE PATENTSCHRIFT**

(45) Veröffentlichungstag und Bekanntmachung des Hinweises auf die Patenterteilung:
**23.07.2025   Patentblatt 2025/30**

(21) Anmeldenummer: **22195072.8**

(22) Anmeldetag: **12.09.2022**

(51) Internationale Patentklassifikation (IPC):
*C02F 1/461* (2023.01)     *B01D 61/42* (2006.01)
*B01D 69/06* (2006.01)     *B01D 71/02* (2006.01)
*C01D 15/02* (2006.01)     *C02F 1/469* (2023.01)
*C22B 26/12* (2006.01)     *C25B 1/04* (2021.01)
*C25B 1/16* (2006.01)     *C25B 9/19* (2021.01)
*C25B 11/00* (2021.01)     *C02F 1/38* (2023.01)
*C02F 1/44* (2023.01)     *C02F 1/52* (2023.01)
*C02F 101/10* (2006.01)

(52) Gemeinsame Patentklassifikation (CPC):
**B01D 61/422; B01D 71/02; C01D 15/02; C01D 15/08; C22B 26/12; C25B 1/46; C25B 9/15; C25B 13/07; C25B 15/08;** B01D 69/06; C02F 1/4693; C02F 2101/10

(54) **ELEKTROCHEMISCHES HERSTELLEN VON WASSERSTOFF UND LITHIUMHYDROXID UNTER DEFINIERTEN STRÖMUNGSVERHÄLTNISSEN**

ELECTROCHEMICAL PRODUCTION OF HYDROGEN AND LITHIUM HYDROXIDE UNDER DEFINED FLOW CONDITIONS

PRODUCTION ÉLECTROCHIMIQUE D'HYDROGÈNE ET D'HYDROXYDE DE LITHIUM DANS DES CONDITIONS D'ÉCOULEMENT DÉFINIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.03.2024   Patentblatt 2024/11**

(73) Patentinhaber: **Evonik Operations GmbH**
**45128 Essen (DE)**

(72) Erfinder:
- **HYING, Christian**
  **46414 Rhede (DE)**
- **GORMAN, Elisabeth**
  **45721 Haltern am See (DE)**
- **STENNER, Patrik**
  **63452 Hanau (DE)**
- **JURETZKA, Sabrina**
  **60599 Frankfurt am Main (DE)**
- **STADTMÜLLER, Tobias**
  **63500 Seligenstadt (DE)**
- **ARNDT, Sebastian**
  **63452 Hanau (DE)**
- **LÖFFFLER, Frank**
  **64646 Heppenheim (DE)**
- **KLINK-TRAN, Huong**
  **68163 Mannheim (DE)**
- **ANTONI, Jessica**
  **61130 Nidderau (DE)**
- **DECKER, Nicole**
  **44803 Bochum (DE)**
- **DAHLHUES, Meike**
  **45772 Marl (DE)**

(74) Vertreter: **Evonik Patent Association**
**c/o Evonik Industries AG**
**IP Management**
**Postcode 84/339**
**Rodenbacher Chaussee 4**
**63457 Hanau (DE)**

(56) Entgegenhaltungen:
**EP-B1- 2 897 907     US-A1- 2012 103 826**

- **JI ZHI-YONG ET AL: "Preliminary study on recovering lithium from high Mg2+/Li+ratio brines by electrodialysis", SEPARATION AND PURIFICATION TECHNOLOGY, ELSEVIER SCIENCE, AMSTERDAM, NL, vol. 172, 9 August 2016 (2016-08-09), pages 168 - 177, XP029755672, ISSN: 1383-5866, DOI: 10.1016/ J.SEPPUR.2016.08.006**

**Beschreibung**

Für die Herstellung von Lithiumionenbatterien (LIB) wird denknotwenig Lithium (Li) benötigt. Aufgrund seiner hohen Reaktivität kommt Lithium in der Natur nicht als Reinstoff, sondern stets gebunden vor. Als Ausgangstoff für die Herstellung von LIB wird das Lithium in der Regel in Form von Lithiumhydroxid (LiOH) oder von Lithiumcarbonat ($Li_2CO_3$) verwendet.

In den meisten natürlichen Lagerstätten ist Li in Form von Lithiumoxid ($Li_2O$) oder von Salzen wie Lithiumsulfat ($Li_2SO_4$) oder Lithiumchlorid (LiCl) vorhanden. Das Lithiumoxid ist Bestandteil von Erzen wie Pegmatit, wahrendessen Lithiumsulfat und Lithiumchlorid in den Laugen der Li-Salzseen gelöst sind. Im Zuge des bergmännischen Abbaus wird die jeweils gewonnene Lithiumverbindung in Lithiumcarbonat ($Li_2CO_3$) überführt. In einem weiteren Prozessschritt kann das Lithiumcarbonat mit Branntkalk oder Calciumhydroxid in Lithiumhydroxid umgesetzt werden. Die Gewinnung von Li und dessen Umwandung in LiOH ist beschrieben in:

Wietelmann, U. and Steinbild, M. (2014). Lithium and Lithium Compounds. In Ullmann's Encyclopedia of Industrial Chemistry, (Ed.). DOI: 10.1002/14356007.a15_393.pub2

Reiche Li-Lagerstätten sind bekannt, aber die Herstellung von LiOH aus den dort vorhandenen Li-Verbindungen ist sehr energieintensiv- und abwasserintensiv. Darüber hinaus besteht das strategisch begründete Bedürfnis, von den Eigentümern der Lagerstätte unabhängig zu sein.

Eine Lösung dieses Problems könnte darin bestehen, abgenutzte LIB stofflich aufzuarbeiten, sodass das darin enthaltene Lithium wieder als Rohstoff für Neubatterien verwendet werden kann.

Recyclingverfahren für LIB wurden in der Vergangenheit bereits zur technischen Reife entwickelt, jedoch meist mit dem Ziel auf die darin enthaltenen Metalle Fe, Ni, Mn, Co, Mg, Al. Das Alkalimetall Li wurde in der Regel nicht zurückgewonnen, weil es auf Grund seiner hohen Reaktivität nicht einfach aus dem Batterieschrott abzutrennen ist und es in ausreichender Menge kostengünstig aus natürlichen Lagerstätten verfügbar war. Die Gewinnung vom Li aus gebrauchten LIB erschien lange Zeit schlicht unwirtschaftlich.

Inzwischen ist der gesellschaftliche und wirtschaftliche Druck gestiegen, Lithium aus gebrauchten LIB zurückzugewinnen. Der Erfolg dieses Vorhabens setzt voraus, dass rezykliertes Li in einer für die Produzenten von LIB akzeptablen Qualität angeboten werden kann, sodass sich die Herstellungsprozesse für LIB aus Recycling-Li nicht von denen aus bergmännisch gewonnenen Frisch-Li unterscheiden. Die Batteriequalität darf selbstredend nicht leiden. Folglich muss rezykliertes Li, insbesondere in Form von LiOH, sehr anspruchsvolle Spezifikationen hinsichtlich Reinheit erfüllen. Darüber hinaus muss das Verfahren zur Rückgewinnung von Li aus Altbatterien möglichst energieeffizient sein. Ebenso sollte das Verfahren wenig Wasser verbrauchen.

Bekannte Verfahren zur Rückgewinnung von Lithium aus Altbatterien haben zusammengestellt:

Pankaj K. Choubey et al.: Advance review on the exploitation of the prominent energystorage element Lithium. Part II: From sea water and spent lithium ion batteries (LIBs), Minerals Engineering, Volume 110, 2017, Pages 104-121 DOI: 10.1016/j.mineng.2017.04.008.

Eine Technologie, die im vorstehenden Übersichtsartikel lediglich beiläufig als "LISM" erwähnt wird, ist die Elektrolyse von Li-haltigen Wässern mit Hilfe von so genannten LiSICon-Membranen.

LiSICon steht für Lithium Super Ionic Conductor. Es handelt sich dabei um eine Klasse aus anorganischem, (glas)keramischen Material, welches elektrisch isoliert, aber zugleich eine intrinsische Leitfähigkeit für Li-Ionen aufweist. Der Transportmechanismus für Li ist in der Kristallstruktur des Materials begründet. Die Li-Ionen werden - vereinfacht gesprochen - durch die Kristalle "durchgereicht". Kommerziell verfügbare LiSICon-Materialien sind unter anderem Lithium-Aluminium-Titanphosphat (LATP), Lithium-Aluminium-Titan-Siliciumphosphat (LATSP), Lithium-Aluminium-Germaniumphosphat (LAGP) und Lithium-Lanthan-Titanoxid (LLTO). Diese Materialien wurden ursprünglich als Festkörper-Elektrolyt für LIB entwickelt. Eine Übersicht zu den Transportmechanismen von LiSICons, deren Kristallstruktur und Herstellung bieten:

Palakkathodi Kammampata et al.: Cruising in ceramics-discovering new structures for all-solid-state batteries-fundamentals, materials, and performances. Ionics 24, 639-660 (2018) DOI : 10.1007/s11581-017-2372-7

Yedukondalu Meesala et al.: Recent Advancements in Li-Ion Conductors for All-Solid-State Li-Ion Batteries. ACS Energy Lett. 2017, 2, 12, 2734-2751

DOI: 10.1021/acsenergylett.7b00849

Spezielle LiSICon Stöchiometrien werden beschrieben von:

<br/>

EP 4 335 829 B1

Sofia Saffirio et al.$Li_{1.4}Al_{0.4}Ge_{0.4}Ti_{1.4}(PO_4)_3$ promising NASICON-structured glass-ceramic electrolyte for all-solid-state Li-based batteries: Unravelling the effect of diboron trioxide, Journal of the European Ceramic Society, Volume 42, Issue 3, 2022, Pages 1023-1032 DOI 10.1016/j.jeurceramsoc.2021.11.014.

Eongyu Yi et al. Materials that can replace liquid electrolytes in Li batteries: Superionic conductivities in Li1.7Al0.3Ti1.7Si0.4P2.6O12. Processing combustion synthesized nanopowders to free standing thin films. Journal of Power Sources, Volume 269,2014, Pages 577-588, DOI 10.1016/j.jpowsour.2014.07.029.

Aufgrund ihrer selektiven Leitfähigkeit für Li-Ionen können LiSICon-Materialien als Membran zur Abtrennung von Li aus Li-haltigen Gemischen verwendet werden. Das Li muss in dem Gemisch in ionischer Form vorliegen, etwa als in Wasser gelöstes Li-Salz. Als treibende Kraft, um die Li-Ionen durch die LiSICon -Membran zu fördern, wird eine elektrische Spannung benötigt. Hierfür wird eine elektrochemische Zelle aufgebaut, die zwei Elektroden und eine LiSICon-Membran umfasst, welche die Zelle in zwei Kompartimente aufteilt. In jedem Kompartiment befindet sich eine Elektrode. Abhängig von der Polarität der im Kompartiment enthaltenen Elektrode werden die Kompartimente als anodisch oder kathodisch bezeichnet. An den Elektroden wird eine elektrische Spannung angelegt und das Li-haltige Wasser als Anolyt in das anionische Kompartiment eingefüllt. Das kathodische Kompartiment wird mit Wasser als Katholyt gefüllt. Die Membran reicht die Li-Kationen zu der Kathode durch. Das Wasser in dem kathodischen Kompartiment (Katholyt) wird daher mit Li angereichert, während das Wasser auf der anodischen Seite (Anolyt) um Li abgereichert wird. Ein solcher Vorgang wird Membranelektrolyse genannt.

Membranelektrolytische Verfahren zur Gewinnung von Lithium mit Hilfe von LiSICon Membranen sind bereits im Stand der Technik beschrieben.

So beschreiben Zhen Li et al. ein Verfahren, bei dem als Rohstoff das schwach Lithium-haltige Wasser des Roten Meeres verwendet wird:

Zhen Li et al.: Continuous electrical pumping membrane process for seawater lithium mining. Energy Environ. Sci., 2021, 14, 3152 DOI: 10.1039/d1ee00354b

Die Arbeitsgruppe um Zhen Li verwenden LLTO als Membran. Das abgetrennte Zielprodukt ist Lithiumphosphat ($Li_3PO_4$), was für die Produktion von Lithium-Eisen-Phosphat (LFP) Batterien in Betracht kommt. LIB mit einem anderen Kathodenmaterial wie beispielsweise Nickel-Mangan-Cobalt (NMC) oder Lithium-Mangan-Oxid (NMO) können damit nicht direkt hergestellt werden.

Mithilfe von Solarstrom, einer LAGP Membran und einer Kupferfolie wollen Yang et al. metallisches Lithium direkt aus Meerwasser gewinnen:

Sixie Yang et al.: Lithium Metal Extraction from Seawater. Joule, Volume 2, Issue 9, 2018, Pages 1648-1651, DOI 10.1016/j.joule.2018.07.006.

US 2016/0201163 A1 beschreibt die Abtrennung von Li Ionen aus einer Sole wie Meerwasser mit Hilfe von LiSICon Membranen. Als Membranmaterialien werden konkret $Li_3N$, $Li_{10}GeP_2S_{12}$ und $La_xLi_yTiO_2$, $Li_{1+x+y}Al_x(Ti, Ge)_{2-x}Si_yP_{3-y}O_{12}$ vorgeschlagen. Zielprodukt ist Lithiumcarbonat ($Li_2CO_3$).

Auch die WO 2019055730 A1 beschäftigt sich mit der Abtrennung von Lithium mit Hilfe von LiSICon-Membranen. Konkret werden LLTO oder LAGP oder LATP genannt. Das LiSICon-Material kann auf eine Stützstruktur aufgetragen sein. Die chemische Natur der Stützstruktur wird nicht näher beschrieben. Ebenso wenig wird beschrieben, wie das Auftragen von LiSICon auf die Stützstruktur geschehen soll. Das abgetrennte Zielprodukt sind Li-Ionen.

Aus der US9222148B2 ist es bekannt, Lithium-Hydroxid elektrolytisch an einer LiSICon Membran abzutrennen und sodann Lithiumhydroxid-Hydrat auszufällen.

Neben der Verwendung von keramischen LiSICon Membranen sind auch elektrolytische Verfahren zur Abtrennung von Lithium bekannt, die mit organischen Ionenaustauschmembranen arbeiten.

So beschreibt die EP 3805428 A1 die elektrolytische Herstellung von Lithiumhydroxid. Neben der Elektrolyse wird eine elektrochemische Umsetzung des Lithiums zu Lithiumhydroxid betrieben. Zur Gewinnung der notwendigen Edukte wird gleichzeitig Wasser elektrochemisch gespalten. Hierzu wird eine bipolare Dreikammerzelle mit einer Ionenaustauschmembran verwendet. Es werden die kommerziellen Ionenaustauschmembranen Asahi® AVV, Nafion® 902, Fumatech® FAB, Fumatech® FKB und Neosepta® CMB verwendet. Die chemische Natur dieser Ionenaustauschmembranen ist in EP 3805428 A1 nicht offengelegt, aber es ist überwiegend wahrscheinlich, dass es sich dabei um organische Membranmaterialien handelt. Die Dreikammerzelle arbeitet im sauren Milieu. Als Feed wird Wasser enthaltend Li-Salze wie insbesondere Lithiumsulfat ($Li_2SO_4$) oder Lithiumchlorid (LiCl) eingesetzt. Es ist ein Volumenstrom durch eine Beispielzelle angegeben und das Spaltmaß, aber nicht die Breite der Zelle. Strömungseinbauten in der Zelle werden nicht thematisiert.

Eine zweitstufige elektrolytische Herstellung von Lithiumhydroxid aus wässrigem Lithiumsulfat und/oder Lithiumbisulfat bei gleichzeitiger Wasserspaltung offenbart US 10036094 B2. In einer ersten Stufe wird eine elektrochemische Zelle mit zwei Kompartimenten eingesetzt, in der zweiten Stufe eine Dreikammerzelle. In der Dreikammerzelle kann ein pH von 8 bis 10 herrschen. Die Zellen sind mit Ionenaustauschmembranen ausgestattet. Die chemische Zusammensetzung der Membranen ist nicht gegeben. Die folgenden kommerziellen Membranen werden erwähnt: Fumatech® FAB, Astom® ACM, Asahi® MV, Nafion® 324 oder Astom® AHA.

Ein prinzipieller Nachteil von Polymermembranen ist ihre Wasserdurchlässigkeit. Dadurch wird der Anolyt mit Wasser aus dem Katholyt verdünnt. Außerdem sind organische Ionenaustauschmembranen weniger ionenselektiv als anorganische LiSICon-Materialien: Sie lassen nicht nur $Li^+$, sondern auch $Na^+$ passieren, sodass die Stoffreinheit des Zielproduktes beeinträchtigt wird, sobald sich im Feed auch Natrium findet. Neben der Reinheit des Zielprodukts leidet auch die Stromeffizienz des Prozesses: Die wertvolle elektrische Energie wird bei der Elektrolyse mit nicht ionenselektiven Membranen auch dafür verbraucht, unerwünschtes $Na^+$ in das zweite Kompartiment zu transportieren. Im zweiten Kompartiment angekommen wird das $Na^+$ zudem über unbeabsichtigte elektrochemische Prozesse in unerwünschte Nebenprodukte umgesetzt. Bezogen auf die Ausbeute an dem Zielprodukt Li ist die Energieeffizienz des Prozesses eingeschränkt. Schließlich sind diese Membranen empfindlich gegen die Anwesenheit von zweiwertigen Kationen wie bspw. $Mg^{++}$ und $Ca^{++}$. Diese Kationen vergiften die Membran mit der Zeit, sodass die Betriebsdauer organischer Ionenaustauschmembranen eingeschränkt ist.

Eine bessere Ionenselektivität versprechen die (glas)keramischen LiSICon Materialien. Ein für die industrielle Praxis hochrelevantes Problem ist hier jedoch weiterhin die Stabilität der LiSICon Membran gegenüber Verunreinigungen. So enthalten die $Li^+$-haltigen Wässer, die bei der Aufarbeitung von gebrauchten LIB entstehen, weitere Kationen wie insbesondere $Na^+$ und $K^+$, welche das LiSICon-Material nachhaltig schädigen: Diese Kationen besetzen offenbar dauerhaft die Fehlstellen in der Kristallstruktur, sodass ein Transport der $Li^+$-Kationen durch die Membran kaum mehr möglich ist. Die Betriebsdauer der elektrochemischen Zelle ist dann abgelaufen. Weil LiSICon-Material sehr teuer ist, ist das Recycling von Li aus LIB bei kurzer Lebensdauer der Membran unwirtschaftlich. Auch die Sole der Li-Salzseen enthält von Natur aus viel Natrium und kann daher nicht auf bekannte LiSICon-Membranen losgelassen werden. Daher wird Lithium aus Salzseen weiterhin energieintensiv thermisch abgetrennt und/oder unter großem Wassereinsatz schrittweise gelöst und wieder auskristallisiert. Zwar wird dabei das Wasser mit Sonnenstrahlung verdunstet; jedoch ist das Wasser zum Lösen von LiCl in den Wüsten Südamerikas rar. So führt dieser Weg dort zu großen Problemen.

Ein weiteres praktisches Problem ist der hohe spezifische elektrische Widerstand des LiSICon-Materials. Dadurch erhält die elektrochemische Zelle einen hohen OHM'schen Innenwiderstand, sodass das Verfahren einen entsprechend großen elektrischen Energiebedarf hat. Um den zu senken, kann die Membran theoretisch verdünnt werden. Jedoch erreicht sie dann aufgrund ihrer geringen Materialstärke in aggressiven Umgebungen wiederum nur eine geringe Standzeit.

Nach alledem liegt der vorliegenden Erfindung die Aufgabe zu Grunde, ein Verfahren zur elektrochemischen Herstellung von LiOH aus $Li^+$-haltigem Wasser mit Hilfe einer LiSICon Membran anzugeben, welches sich auch im großtechnischen Maßstab wirtschaftlich betreiben lässt. Insbesondere soll das Verfahren eine hohe Energieeffizienz aufweisen und selbst dann eine lange Standzeit der Membran erreichen, wenn der verwendete Feed Verunreinigungen enthält, welche für LiSICon Materialien schädlich sind.

Gelöst wird diese Aufgabe durch ein Verfahren zur Herstellung von Wasserstoff und Lithiumhydroxid mit den folgenden Schritten:

a) Bereitstellen eines Feed enthaltend zumindest Wasser, Li-Ionen, sowie Verunreinigungen, wobei die Konzentration von Li-Ionen in dem Feed $C_F$ mindestens 200 Gew.-ppm oder zwischen 500 Gew.-ppm und 140000 Gew.-ppm beträgt, jeweils bezogen auf das Gesamtgewicht des Feeds;

b) Bereitstellen eines armen Arbeitsmediums enthaltend Wasser und darin gelöst Lithiumhydroxid, wobei die Konzentration von Lithiumhydroxid in dem armen Arbeitsmedium $C_{M0}$ bezogen auf das Gesamtgewicht des armen Arbeitsmediums mindestens 50 Gew.-ppm beträgt;

c) Bereitstellen von mindestens einer elektrochemischen Zelle, wobei die elektrochemische Zelle die folgenden Merkmale aufweist:

i. die elektrochemische Zelle umfasst ein erstes Kompartiment, in dem eine Anode angeordnet ist;
ii. die elektrochemische Zelle umfasst ein zweites Kompartiment, in dem eine Kathode angeordnet ist;
iii. die elektrochemische Zelle umfasst eine Flachmembran, welche das erste Kompartiment von dem zweiten Kompartiment trennt, wobei die Flachmembran die Fläche A aufweist;
iv. die Flachmembran enthält ein anorganisches Material, welches eine Leitfähigkeit für Li-Ionen besitzt und welches elektrisch isolierend ist;

d) Bereitstellen von mindestens einer elektrischen Spannungsquelle, welche über eine erste elektrische Leitung mit der Anode und über eine zweite elektrische Leitung mit der Kathode verbunden ist;
e) Kontinuierliches Beaufschlagen des ersten Kompartiments mit dem Feed;
f) Beaufschlagen des zweiten Kompartiments mit dem armen Arbeitsmedium;
g) Beaufschlagen der elektrochemischen Zelle mit einer von der elektrischen Spannungsquelle bezogenen elektrischen Spannung U, dergestalt, dass ein elektrischer Strom $I$ zwischen Anode und Kathode fließt, wobei der Quotient $Q$ aus der Stromstärke des elektrischen Stroms $I$ und der Fläche $A$ der Flachmembran zwischen 100 A/m$^2$ und 500 A/m$^2$ oder zwischen 150 A/m$^2$ und 350 A/m$^2$ beträgt;

h) Kontinuierliches Abziehen von Abwasser enthaltend zumindest Wasser, darin gelöste Li-Salze, Sauerstoff, sowie Verunreinigungen aus dem ersten Kompartiment, wobei die Konzentration von Li-Ionen in dem Abwasser $C_W$ bezogen auf das Gesamtgewicht des Abwassers geringer ist als die Konzentration von Li-Ionen im Feed $C_F$;

i) Abziehen eines reichen Arbeitsmediums enthaltend Wasser und Lithiumhydroxid sowie von Wasserstoff aus dem zweiten Kompartiment, wobei die Konzentration von Lithiumhydroxid in dem reichen Arbeitsmedium $C_{M1}$ bezogen auf das Gesamtgewicht des reichen Arbeitsmediums größer ist als die Konzentration im von Lithiumhydroxid in dem armen Arbeitsmedium $C_{M0}$;

bei welchem durch das kontinuierliche Beaufschlagen des ersten Kompartiments mit dem Feed und durch das kontinuierliche Abziehen des Abwassers aus dem ersten Kompartiment eine erste Strömung entsteht, die mit einer Überströmgeschwindigkeit CFV durch das erste Kompartiment an der Flachmembran entlang strömt, wobei die Überströmgeschwindigkeit CFV größer ist als 220 mm/s oder größer ist als 350 mm/s oder größer ist als 470 mm/s und bei welchem die Überströmgeschwindigkeit CFV kleiner ist als eine Grenzgeschwindigkeit, die ausgewählt ist aus der Gruppe bestehend aus den folgenden Grenzgeschwindigkeiten: 600 mm/s, 960 mm/s, 1500 mm/s, 2400 mm/s, 3780 mm/s, 6000 mm/s.

Ein wesentlicher Aspekt der vorliegenden Erfindung besteht darin, dass die Strömungsverhältnisse in dem ersten Kompartiment der elektrochemischen Zelle so eingestellt werden, dass der Anolyt mit einer gewissen mindest-Überstromgeschwindigkeit über die Membran strömt.

Der Anolyt ist das Material in dem ersten Kompartiment. Beim Zufluss handelt es sich um den Feed, beim Abfluss aus dem ersten Kompartiment das Abwasser. Innerhalb des ersten Kompartiments geht der Anolyt durch die elektrochemischen Prozesse in der Zelle von dem Feed in das Abwasser über.

Die Überströmungsgeschwindigkeit (engl.: cross flow velocity - CFV) ist ein etablierter Betriebsparameter aus der Membrantechnik. Sie berechnet sich aus dem Quotienten des Volumenstroms Q durch das erste Kompartiment und dem Strömungsquerschnitt des ersten Kompartiments, also dem Produkt der Breite b der Membran quer zur Strömungsrichtung und der Höhe h des Spaltes zwischen Membran und Anode:

$$CFV = Q/(b*h)$$

Nach den hier vorliegenden Erkenntnissen sollte die Überströmungsgeschwindigkeit CFV mindestens größer als 220 mm/s sein. Besser ist eine Überströmungsgeschwindigkeit CFV größer als 350 mm/s und noch besser ist eine Überströmungsgeschwindigkeit CFV größer ist als 470 mm/s.

Die große Überströmgeschwindigkeit bewirkt möglicherweise, dass die im Anolyt enthaltenden, aus dem Feed stammenden Verunreinigungen sich in geringerem Umfang auf der Membran niederschlagen und mit dem Abwasser aus dem ersten Kompartiment wieder ausgeschwemmt werden. Auf diese Weise können die Verunreinigungen die Membran nicht zusetzen und ihre Permeanz senken.

Experimentelle Daten belegen, die Permeanz der Membran mit steigender Überstromgeschwindigkeit zunimmt. Die Permeanz gibt an, wie viel Masse an Lithium pro Membranfläche und Zeit durch die Membran transportiert werden. Somit ist die Permeanz ein Maß für die Effizienz des Verfahrens aufzufassen. Mithin ist zu erwarten, dass bei einer höheren Überströmungsgeschwindigkeit die Wirtschaftlichkeit des Prozesses zunimmt.

Die Überströmungsgeschwindigkeit kann nicht beliebig hoch werden, weil zunehmend Turbulenzen in der Strömung entstehen, welche den Strömungswiderstand anheben. Folglich wird immer mehr Antriebsleistung notwendig, um den Anolyt durch das erste Kompartiment zu pumpen.

Um einen guten Kompromiss zwischen erzielter Permeanz und aufgebrachter Antriebsleistung zu schließen, macht es Sinn, die Überstromgeschwindigkeit zu deckeln. Erfindungsgemäß ist die Überströmgeschwindigkeit CFV kleiner als eine Grenzgeschwindigkeit. Die erreichbare Grenzgeschwindigkeit hängt vom Setup der elektrochemischen Zelle und ihren Nebenaggregaten ab und kann wahlweise 600 mm/s oder 960 mm/s oder 1500 mm/s oder 2400 mm/s oder 3780 mm/s oder 6000 mm/s betragen.

Überraschenderweise hat sich gezeigt, dass Strömungseinbauten wie etwa Spacer, wie sie in Spiralwickelmodulen eingebaut werden, einen negativen Einfluss auf die Permeanz des Prozesses ausüben können. Dies ist überraschend, weil Spacer regelmäßig in Membranprozessen eingesetzt werden. Eine bevorzugte Weiterbildung der Erfindung sieht es deswegen vor, auf Strömungseinbauten wie Spacer zu verzichten.

Erfindungsgemäß wird eine Flachmembran eingesetzt. Es ist bislang nicht gelungen, eine elektrochemische Zelle mit einer Hohlfasermembran zu realisieren.

Die Flachmembran wird vorzugsweise in einem Flachmodul eingesetzt. Ein Einsatz in einem Spiralwickelmodul ist nicht bevorzugt, da sich hier die elektrische Verschaltung als kompliziert erweist. Außerdem gestaltet sich die Strömungsführung in Spiralwickelmodulen als schwierig, weil bei der Elektrolyse beide Halbzellen müssen: Bei einer Gastrennung, die gemeinhin in Spiralwickelmodulen betrieben wird, muss lediglich das Permeat abgeführt.

Vorteilhafterweise wird nicht nur eine Strömung durch das erste Kompartiment etabliert, sondern auch durch das zweite Kompartiment. Folglich sieht eine weitere Ausführungsform der Erfindung es vor, dass das Beaufschlagen des zweiten Kompartiments mit dem armen Arbeitsmedium und das Abziehen des reichen Arbeitsmediums aus dem zweiten Kompartiment kontinuierlich erfolgt, sodass eine zweite Strömung durch das zweite Kompartiment entsteht.

Die Strömungsverhältnisse im zweiten Kompartiment werden vorzugsweise so eingerichtet, dass das Arbeitsmedium (der Katholyt) laminar strömt. Dann weist das zweite Kompartiment einen geringen Strömungswiderstand auf, sodass für den Transport des Arbeitsmediums wenig Energie erforderlich ist.

Aufgrund der in der Zelle herrschenden Strömungsverhältnisse kann der Feed mit Verunreinigungen versehen sein, die allgemeinhin für Li-leitende Membranmaterialien schädlich sind. Insbesondere ist es dank der definierten Strömungsverhältnissen auf der Membran möglich einen Feed zu verarbeiten, der eines oder mehrere der folgenden Anionen enthält: Sulfat, Carbonat, Hydroxid, Chlorid.

Neben den genannten Anionen kann der Feed auch Verunreinigungen in Gestalt von Verbindungen von Elementen enthalten: B, Na, Mg, Al, Si, K, Ca, Mn, Fe, Co, Ni, Cu, C. Die gelisteten Alkali- und Erdalkalimetalle sind Begleitelemente des Lithiums aus natürlichen Lagerstätten, währenddessen die anderen genannten Metalle als Leiter oder Kathodenmaterial in LIB verwendet werden und sich daher in Feeds finden, die bei der Aufarbeitung von verbrauchten LIB gewonnen werden. Der Kohlenstoff stammt aus organischen Materialien, die in LIB verbaut sind, wie etwa Folien, Separatoren oder Kleb- und Dichtstoffe.

Erfindungsgemäß wird eine Membran verwendet, welche ein anorganisches Material enthält. Anders als bei Polymermembranen ist damit die erforderliche Ionenselektivität zu erreichen. Vorzugsweise besteht die Membran vollständig aus dem anorganischen Material. Verbundmembranen, die das anorganische Material lediglich als Beschichtung auf einem Trägermaterial enthalten oder bei denen das anorganische Material in einem andersartigen Matrixmaterial dispergiert ist, haben sich als Irrweg erwiesen.

Der Vorteil der anorganischen Membranen gegenüber Polymermembranen ist auch in deren mechanischen Steifheit begründet: So geraten die anorganischen Membranen bei höheren Überströmungsgeschwindigkeiten nicht so stark in Schwingung wie Polymermembranen.

Damit der Prozess funktioniert, muss das anorganische Material Li-Ionen leiten und zugleich elektrisch isolieren.

Die spezifische Leitfähigkeit $\sigma$ für Li-Ionen sollte einer Temperatur von 23°C mindestens $1*10^{-5}$ S/m oder mindestens $5*10^{-5}$ S/m oder mindestens $10*10^{-5}$ S/m und maximal $100*10^{-5}$ S/m betragen. Die Li-Leitfähigkeit des Materials wird per Impedanz Spektroskopie gemessen. Diese Messung geschieht wie folgt:
Der Messaufbau umfasst zwei zylindrische Elektroden, zwischen denen die Probe angeordnet wird. Um einen optimalen Kontakt mit den Elektroden und reproduzierbaren Kontraktdruck sicher zu stellen, wird in Gewicht auf der Probe platziert.

Ein Potentiostat (ZAHNER-elektrik I. Zahner-Schiller GmbH & Co. KG, Kronach-Gundelsdorf, Germany) wird mit den Elektroden verbunden und über die Software Thales (ZAHNER) gesteuert.

Die Messungen werden durchgeführt in einem Frequenzbereich von 1 Hz bis 4 MHz und einer Amplitude von 5mV mit Proben, die poliert wurden und auf die eine dünne, leitfähige Goldschicht aufgesputtert wurde.

Die Messergebnisse werden in Nyquist-Diagrammen dargestellt und mit der Software Analysis (ZAHNER) ausgewertet. Der elektrische Widerstand wird an dem Maximum der Kurve des Nyquist-Diagramms abgelesen. Die spezifische Ionen-Leitfähigkeit $\sigma$ [mS/cm] wird dann berechnet mit der Formel $\sigma=(h\cdot10^4)/(R\cdot\pi/4\cdot d^2)$, worin h für die Höhe der Probe in mm, R für den gemessenen elektrische Widerstand in $\Omega$ und d für den Durchmesser der Probe in mm stehen.

Die spezifische Leitfähigkeit für Elektronen $\gamma$ (elektrische Leitfähigkeit) sollte bei einer Temperatur von 23°C weniger als $10^{-7}$ S/cm ($10^{-9}$ S/m) oder weniger als $10^{-12}$ S/m oder weniger als $10^{-16}$ S/m betragen. Das anorganische Material ist daher aus elektronenleitender Sicht als Nichtleiter zu qualifizieren.

Vorzugsweise wird als anorganisches Material ein LiSICon verwendet. LiSICon-Materialien sind (glas)keramische Stoffe, die Lithium-Ionen leiten und zugleich elektrisch isolieren. Es können grundsätzlich alle bekannten LiSICon-Materialien als anorganisches Material im Sinne der Erfindung eingesetzt werden. Bekannte LiSICon-Materialien erfüllen die oben angegebenen Anforderungen sowohl an die elektrische Leitfähigkeit als auch an die Ionenleitfähigkeit des anorganischen Materials.

Beispielsweise kann das LiSICon-Material Lithium-Aluminium-Titanphosphat (LATP) verwendet werden. Dementsprechend sieht eine Variante der Erfindung es vor, dass es sich bei dem anorganischen Material um eine Verbindung der folgenden Stöchiometrie handelt:

$$Li_{1+x}Al_xTi_{2-x}(PO_4)_3$$

worin gilt: $0.1\leq x\leq0.3$, wobei bevorzugt gilt $x=0.3$.

Alternativ kann das LiSICon-Material Lithium-Aluminium-Germaniumphosphat (LAGP) verwendet werden. Dementsprechend sieht eine Variante der Erfindung es vor, dass es sich bei dem anorganischen Material um eine Verbindung der folgenden Stöchiometrie handelt:

$$Li_{1+x}Al_xGe_{2-x} (PO_4)_3$$

worin gilt: x=0 oder x=0.2 oder x=0.4.

Alternativ kann das LiSICon-Material Lithium-Aluminium-Titan-Siliciumphosphat (LATSP) verwendet werden. Dementsprechend sieht eine Variante der Erfindung es vor, dass es sich bei dem anorganischen Material um eine Verbindung der folgenden Stöchiometrie handelt:

$$Li_{1+x+y}Al_xTi_{2-x}Si_yP_{3-y}O_{12}$$

worin gilt: $0.1 \leq x \leq 0.3$ und $0.2 \leq y \leq 0.4$.

Besonders bevorzugt wird aber ein LiSICon verwendet, welches sich aus dem Lithium-Aluminium-Germaniumphosphat ableitet, aber zusätzlich Titan enthält. Es wird als LAGTP bezeichnet.

Dementsprechend sieht eine bevorzugte Variante der Erfindung es vor, dass es sich bei dem anorganischen Material um eine Verbindung der folgenden Stöchiometrie handelt:

$$Li_{1.4}Al_{0.4}(Ge_{1-x}Ti_x)_{1.6} (PO_4)_3$$

worin gilt: $0 \leq x \leq 1$.

Eine besonders bevorzugte Weiterbildung der Erfindung sieht es vor, dass ein LATSP verwendet wird, was zusätzlich Germanium enthält. Es wird hier LAGTSP genannt.

Dementsprechend sieht eine besonders bevorzugte Variante der Erfindung es vor, dass es sich bei dem anorganischen Material um eine Verbindung der folgenden Stöchiometrie handelt:

$$Li_{1+x+y}Al_xTi_{2-x}Si_yP_{3-y}O_{12} * nGeO_2$$

worin gilt: $0 \leq x \leq 1$ und $0 \leq y \leq 1$ und $0 \leq n \leq 1$

Ein LAGTSP ist beispielsweise erhältlich von der Fa. OHARA GmbH, Hofheim, Deutschland erhältlich unter dem Produktnamen LICGC® AG01.

Als Alternative zu den genannten Phosphaten kann das oxidische LiSICon-Material Lithium-Lanthan-Titanoxid (LLTO) verwendet werden. Dementsprechend sieht eine Variante der Erfindung es vor, dass es sich bei dem anorganischen Material um eine Verbindung der folgenden Stöchiometrie handelt:

$$Li_{3x}La_{(2/3)-x\square(1/3)-2x}TiO_3$$

worin gilt: $0 \leq x \leq 0.16$.

Das Lithiumhydroxid ist in dem reichen Arbeitsmedium enthalten und wird mit diesem aus dem zweiten Kompartiment abgezogen. Um es nutzbar zu machen, muss es aus dem reichen Arbeitsmedium abgetrennt werden. Dafür wird ein Trennapparat bereitgestellt. Eine bevorzugte Weiterbildung der Erfindung sieht daher die folgenden zusätzlichen Verfahrensschritte vor:

k) Bereitstellen eines Trennapparates;
l) Abtrennen von Lithiumhydroxid aus dem reichen Arbeitsmedium mit Hilfe des Trennapparates.

Nach dem Abtrennen des Lithiumhydroxid aus dem reichen Arbeitsmedium kann das Arbeitsmedium entweder als Abwasser entsorgt werden oder vorzugsweise als armes Arbeitsmedium wiederverwertet werden. Dafür muss der Trennappart so gefahren werden, dass das LiOH nicht vollständig abgetrennt wird, sondern dass die Mindestkonzentration $c_{m0}$ von 50 Gew.-ppm LiOH nicht unterschritten wird. Sodann kann das Arbeitsmedium als armes Arbeitsmedium in das zweite Kompartiment rezykliert werden. Es entsteht so ein Kreislauf des Arbeitsmediums zwischen dem zweiten Kompartiment und dem Trennapparat.

Eine bevorzugte Weiterbildung der Erfindung sieht daher den folgenden zusätzlichen Verfahrensschritten vor:
l) Abtrennen von Lithiumhydroxid aus dem reichen Arbeitsmedium mit Hilfe des Trennapparates, sodass das arme Arbeitsmedium erhalten wird,

wobei der Schritt
b) Bereitstellen eines armen Arbeitsmediums enthaltend Wasser und darin gelöst Lithiumhydroxid, wobei die Konzentration von Lithiumhydroxid in dem armen Arbeitsmedium $C_{M0}$ bezogen auf das Gesamtgewicht des armen Arbeitsmediums mindestens 50 Gew.-ppm beträgt;

mit Hilfe des Trennapparates erfolgt.

Um die Kreislaufführung des Arbeitsmediums zwischen Trennapparat und zweiten Kompartiment in zu ermöglichen, macht es Sinn, beide Apparate an demselben Ort aufzustellen. Derselbe Ort ist als eine zusammenhängende Produktionsanlage zu verstehen. Folglich sind elektrochemische Zelle und Trennappart Teil einer zusammenhängenden Anlage.

Es ist auch denkbar, den Trennappart entfernt von der elektrochemischen Zelle, an einem anderen Standort aufzustellen. Dann muss allerdings das Arbeitsmedium zwischen Zelle und Trennappart transportiert werden. Dies macht aus energetischen Gesichtspunkten aber kaum Sinn.

Vorzugsweise wird zumindest die elektrochemische Zelle sowohl auf der Anolyt-Seite als auch auf der Katholyt-Seite kontinuierlich betrieben. Dies bedeutet, dass das Beaufschlagen des zweiten Kompartiments mit dem armen Arbeitsmedium und das Abziehen des reichen Arbeitsmediums aus dem zweiten Kompartiment kontinuierlich erfolgt, sodass eine zweite Strömung durch das zweite Kompartiment entsteht. Folglich werden beide Kompartimente dauerhaft durchströmt. Das erste Kompartiment wird von Feed durchströmt, wobei Abwasser entsteht, währenddessen das zweite Kompartiment von Arbeitsmedium durchströmt wird, welches als armes Arbeitsmedium anströmt und als reiches Arbeitsmedium abströmt. Dies ermöglicht einerseits einen höheren Durchsatz und anderseits werden membranschädliche Bestandteile von Feed und Arbeitsmedium kontinuierlich abgezogen. Daher ist im kontinuierlichen Betrieb eine bessere Membranhaltbarkeit zu erwarten als im Batchbetrieb auf der Katholyt-Seite.

Auch im kontinuierlichen Betrieb ist darauf zu achten, dass die erfindungsgemäßen Strömungsverhältnisse des Anolyten beibehalten werden, nämlich dass die erste Strömung mit einer hinreichend hohen Überströmungsgeschwindigkeit durch das erste Kompartiment entlang der Membran strömt. Hinsichtlich der Strömungsverhältnisse des Katholyts in dem zweiten Kompartiment sollte jedoch eine laminare Strömung angestrebt werden, da dies den Strömungswiderstand im zweiten Kompartiment verringert und dadurch weniger Energie zur Bewegung des Arbeitsmediums benötigt wird. Eine besondere Ausführungsform sieht es daher vor, dass die zweite Strömung laminar ist.

**Figurenbeschreibung:**

Die Erfindung soll nun anhand von Prozessfließbildern näher erläutert werden. Hierfür zeigen:

Figur 1: Funktionsprinzip zeitgleiche Membranelektrolyse von Li$^+$ und Wasserelektrolyse in elektrochemischer Zelle mit LiSICon Membran;

Figur 2: Funktionsprinzip Kreislauf zwischen elektrochemischer Zelle und Trennapparat.

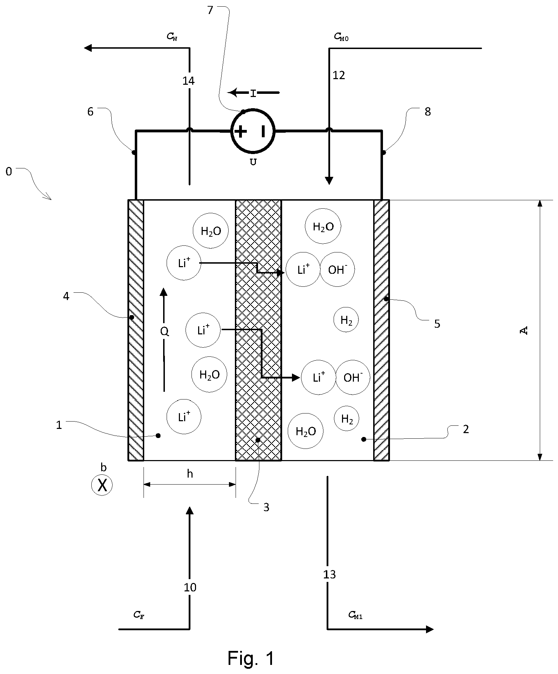

Die für die Durchführung des Verfahrens notwendige elektrochemische Zelle 0 ist in Figur 1 dargestellt. Sie umfasst ein erstes Kompartiment 1 und ein zweites Kompartiment 2. Beide Kompartimente 1, 2 sind von einer Membran 3 voneinander getrennt. In dem ersten Kompartiment 1 ist eine Anode 4 angeordnet. In dem zweiten Kompartiment 2 ist eine Kathode 5 angeordnet. Das erste Kompartiment 1 kann daher auch als anodisches Kompartiment bezeichnet werden, währenddessen das zweite Kompartiment 2 als kathodisch bezeichnet wird.

Eine erste elektrische Leitung 6 verbindet die Anode 4 mit einer Spannungsquelle 7. Eine zweite elektrische Leitung 8 verbindet die Kathode 5 mit der Spannungsquelle 7. Die Polarität der Spannungsquelle 7 ist so gewählt, dass der positive Pol der Spannungsquelle 7 auf die Anode 4 geschaltet ist, währenddessen der negative Pol der Spannungsquelle 7 auf die Kathode 5 geschaltet ist.

Durch die beiden elektrischen Leitungen 6, 8 und über die elektrische Spannungsquelle 7 fließt ein elektrischer Strom *I*. Da die Membran 3 elektrisch isoliert, gibt es keinen elektrischen Kurzschluss zwischen den beiden Elektroden 4, 5 über die Membran 3.

Die Membran 3 ist eine Flachmembran, die vollständig aus einem LiSICon Material besteht. Die Anode 4 ist ein metallisches, flaches Blech enthaltend Titan, Niob oder Tantal. Die Kathode 5 ist ebenfalls ein flaches Metallblech enthaltend Titan oder Nickel. Einfachstenfalls wird rostfreies Stahlblech als Kathode verwendet. Anode 4, Kathode 5 und Membran 3 haben dieselbe Gestalt, sie können rechteckig oder kreisrund sein. Dies ist in der Seitenansicht der Figur 1 nicht zu erkennen. Anstelle von Blechen können auch Streckmetalle, Gitter oder Netze aus den angegebenen Materialien als Elektrode verwendet werden.

Die elektrochemische Zelle 0 weist eine aktive Fläche A auf, welche im Wesentlichen dem Flächeninhalt der Membran 3, der Anode 4 und der Kathode 5 entspricht. Die aktive Fläche kann durch Einbau von Dichtelementen gegenüber der tatsächlichen Fläche der Elektroden und der Membran verkleinert sein. Die aktive Fläche ist der Flächenanteil, der für den elektrochemischen Prozess in der Zelle 0 zur Verfügung steht.

Im Betrieb wird das erste Kompartiment 1 mit einem Feed 10 beaufschlagt. Bei dem Feed 10 handelt es sich um eine wässrige Lösung enthaltend Li+ Kationen. Aus elektrochemischer Sicht ist der Feed 10 als Anolyt aufzufassen.

Bei dem Feed 10 kann es sich um eine Li-Lauge aus einer natürlichen Lagerstätte handeln oder um ein Stoffstrom, der bei der Aufarbeitung von verbrauchten LIB anfällt. Die Konzentration der Li+ Kationen im Feed 10 (Formelbuchstabe $c_F$) sollte mindestens 200 Gew.-ppm betragen, bezogen auf die Gesamtmasse des Feeds. Meerwasser hat eine geringere Li-Konzentration und müsste daher erst aufkonzentriert werden, bevor es in dem Verfahren verwendet wird. Der Feed 10 enthält auch Anionen wie Sulfat oder Chlorid. Die Feed 10 enthält auch Verunreinigungen. Anionen und Verunreinigungen sind in Figur 1 nicht dargestellt. Hauptkomponente des Feeds 10 ist Wasser $H_2O$.

Das zweite Kompartiment wird mit einem armen Arbeitsmedium 12 beaufschlagt. Das arme Arbeitsmedium 12 ist Wasser $H_2O$ mit einer geringen Konzentration $C_{M0}$ Li$^+$ Kationen. Die Konzentration $c_{M0}$ beträgt mindestens 50 Gew.-ppm bezogen auf die Gesamtmasse des armen Arbeitsmediums 12. Aus elektrochemischer Sicht ist das arme Arbeitsmedium 12 als Katholyt aufzufassen.

Die elektrochemische Zelle 0 wird zudem mit einer von der Spannungsquelle 7 bezogener elektrischer Spannung $U$ beaufschlagt. Dies bewirkt Folgendes:

Zum einen kommt es zu einer Wasserelektrolyse, bei der Wasser ($H_2O$) elektrochemisch in Wasserstoff ($H_2$) und Sauerstoff ($O_2$) getrennt wird. An der Kathode 5 wird OH$^-$ und Wasserstoff gebildet. Die OH$^-$ - Anionen können die Membran 3 allerdings nicht überwinden und verbinden sich mit den im kathodischen Kompartiment 2 vorhandenen Li$^+$ -Kationen zu Lithiumhydroxid (LiOH). An der Anode 4 wird Sauerstoff und H$^+$ gebildet.

Die Bildung des LiOH im kathodischen Kompartiment 2 wird dadurch aufrechterhalten, dass Li+ Kationen getrieben von der Spannung $U$ aus Feed 10 in Richtung der Kathode 5 wandern. Sie überwinden dabei die Membran 3 aufgrund deren Leitfähigkeit für Li Ionen und reichern sich im Arbeitsmedium an (Membranelektrolyse). So entsteht ein reiches Arbeitsmedium 13, was aus dem zweiten Kompartiment 2 abgezogen wird. Die Konzentration an Li+ Ionen im reichen Arbeitsmedium 13 ist größer als im armen Arbeitsmedium 12, es gilt $c_{M1} > c_{M0}$.

In der elektrochemischen Zelle 0 läuft somit gleichzeitig eine Wasserelektrolyse, eine Membranelektrolyse von Li$^+$ und eine Synthese von LiOH ab.

Bei dem gleichzeitigen Betrieb der Li+ Membranelektrolyse und der Wasserelektrolyse in der elektrochemischen Zelle entstehen somit direkt Lithiumhydroxid LiOH und molekularer Wasserstoff $H_2$. Das LiOH ist in Wasser gelöst. Der Wasserstoff ist teilweise gelöst, teilweise liegt er gasförmig vor. Das Wasser mit den Reaktionsprodukten LiOH und dem gelösten $H_2$ wird aus dem kathodischen Kompartiment der Zelle als reiches Arbeitsmedium 13 abgezogen. Der gasförmige Wasserstoff $H_2$ wird ebenfalls aus dem zweiten Kompartiment 2 abgezogen.

Der Feed 10 wird durch die Membranelektrolyse um Li$^+$ abgereichert, sodass ein Abwasser 14 entsteht. Es gilt $c_W < c_F$. Der Formelbuchstabe cwsteht dabei für die Konzentration von Li Ionen in dem Abwasser 14, bezogen auf die Gesamtmasse des Abwassers 14. Der Formelbuchstabe $c_F$ steht dabei für die Konzentration von Li Ionen in dem Feed 10, bezogen auf das Gesamtgewicht des Feeds 10.

In Figur 1 ist auch dargestellt, wie die Überströmungsgeschwindigkeit CFV bestimmt wird. Hierzu wird der Abstand zwischen der Membran 3 und der Anode 4, also die Höhe $h$ des Spalts gemessen. Darüber hinaus wird die Breite $b$ der Membran 3 quer zur Strömungsrichtung gemessen. Die Breite b erstreckt sich in Figur 1 senkrecht zur Zeichenebene. Sodann wird der Volumenstrom Q des Anolyten durch das erste Kompartiment bestimmt.

Die Überstromgeschwindigkeit CFV bestimmt sich dann zu

$$CFV=Q/(b*h).$$

Für den Fall, dass eine nicht rechteckige Flachmembran verwendet wird, muss eine mittlere Breite herangezogen wird. Bei der Verwendung einer kreisförmigen Zelle/Membran wird die Breite b mit $\frac{1}{2}\sqrt{2}$ (ca. 70%) der maximalen Breite des Kanalquerschnitts angenommen. Die maximale Breite des Kanalquerschnitts ist der Durchmesser der aktiven Fläche A. Folglich entspricht bei einer kreisrunden Flachmembran mit dem Durchmesser $D$ die Breite b der Seitenlänge des Quadrats, dessen Umkreis den Durchmesser $D$ der kreisförmigen, aktiven Fläche A der Zelle aufweist. Es gilt

$$b = \tfrac{1}{2}\sqrt{2}*D.$$

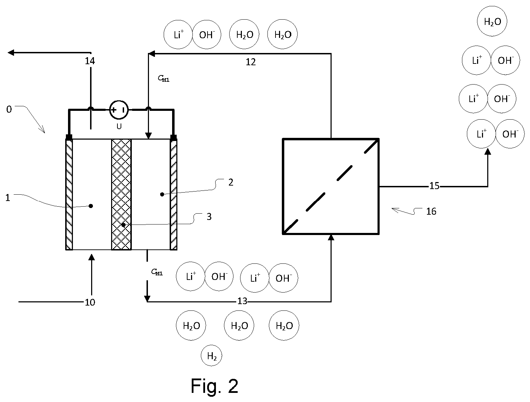

In Figur 2 ist dargestellt, wie das LiOH als Zielprodukt 15 aus dem reichen Arbeitsmedium 13 gewonnen wird.

Dazu wird ein Trennapparat 16 bereitgestellt, in welchen das reiche Arbeitsmedium 13 hineingefahren wird. Der Trennapparat 16 trennt von dem reichen Arbeitsmedium 13 das Zielprodukt 15 ab, welches eine besonders hohe Konzentration an LiOH hat. Das Zielprodukt enthält auch Wasser und Verunreinigungen, abhängig von der gewünschten Spezifikation des Zielprodukts.

Bei dem Trennapparat 16 kann es sich um eine Destillationskolonne oder um einen Kristallisator handeln.

Der um LiOH abgereicherte Ausgangsstrom des Trennapparts 16 wird als armes Arbeitsmedium 12 in das zweite Kompartiment 2 der elektrochemischen Zelle 0 rezykliert.

Wie bereits erwähnt, muss das arme Arbeitsmedium 12 eine gewisse Konzentration $C_{M0}$ an LiOH enthalten, damit der Prozess in der elektrochemischen Zelle 0 dank eines geringen Startwiderstands wie gewünscht anläuft. Die $C_{M0}$

soll mindestens 50 Gew.-ppm. betragen bezogen auf die Gesamtmasse des armen Arbeitsmediums 12. Damit die erforderliche Konzentration $C_{M0}$ gewährleistet ist, wird der Trennapparat 16 so gefahren, dass er das LiOH nicht vollständig aus dem reichen Arbeitsmedium 13 abgetrennt.

Neben Lithiumhydroxid LiOH erzeugt der Prozess auch Wasserstoff $H_2$. Der Wasserstoff $H_2$ ist in dem reichen Arbeitsmedium 13 teilweise gelöst und wird zusammen mit dem LiOH aus dem zweiten Kompartiment 2 abgezogen. Daneben fällt gasförmiger Wasserstoff $H_2$ in der Zelle an.

Da der Wasserstoff $H_2$ leicht aus dem Wasser ausgast, braucht kein großer Aufwand betrieben werden, um ihn aus dem reichen Arbeitsmedium zu entfernen. Nur dann, wenn der Wasserstoff $H_2$ als zweites Zielprodukt verwertet werden soll, ist ein entsprechender zweiter Trennapparat vorzusehen, welcher der Wasserstoff separat in geeigneter Qualität/ Reinheit gewinnt (nicht dargestellt).

Das Wasser $H_2O$, welches in dem reichen Arbeitsmedium 13 enthalten ist, wird weitestgehend vollständig als armes Arbeitsmedium 12 rezykliert. Lediglich das in dem Zielprodukt 15 enthaltene (Kristall-)Wasser geht aus dem Prozess verloren. Es muss entsprechend in das arme Arbeitsmedium 12 nachdosiert werden (nicht dargestellt). Das in dem Feed 10 enthaltene Wasser gelangt nicht in den Kreislauf zwischen zweiten Kompartiment 2 und Trennapparat 16, weil die Membran 3 wasserundurchlässig ist.

**Beispiele:**

Die Erfindung soll nun anhand von Versuchsbeschreibungen näher erläutert werden.

**Allgemeiner Versuchsaufbau - und durchführung**

Zur Durchführung der Elektrolyse wird zunächst die Elektrolysezelle zusammengebaut und an Anolyt- und Katholyt-Behälter angeschlossen. Dabei wird darauf geachtet, dass Zu- und Rücklauf jeweils auf der gleichen Seite angeschlossen werden.

In einer Versuchsausführung sind Anode und Kathode jeweils als flächige Elektrode beschrieben. Hierbei handelt es sich um ein Titanblech mit 19.5 mm Durchmesser und 1.5mm Dicke, beidseitig beschichtet mit IrTi-Mischoxid, 12 g Ir/m2, von der Fa. Metakem GmbH, 61250 Usingen, Deutschland.

Die beprobten Membranen waren ebenfalls kreisrunde Scheiben mit einem Durchmesser von etwa 25 mm. Die Stärke der Membranen betrug zwischen 0.3mm und 2 mm. Das Material der beprobten Membranen wird in den einzelnen Beispielen angegeben.

Die Breite b der Membran quer zur Strömungsrichtung betrug jeweils 14 mm. Die angegebene Breite b entspricht der Seitenlänge des Quadrats, dessen Umkreis denselben Durchmesser aufweist wie kreisförmige, aktive Fläche A. Die Spalthöhe h zwischen Anode und Membran betrug jeweils 2.5 mm. Sofern Spacer eingesetzt wurden, reduzierte sich die Spalthöhe auf 1.8 mm bzw. 1.5 mm.

Die Elektrolyse ist während der gesamten Durchführung mit Stickstoff überlagert, um die Bildung von Lithiumcarbonat zu verhindern. Jede Zelle hat einen separaten Anolyt- und Katholyt-Behälter. Jeder Behälter wird mit etwa 1 kg Flüssigkeit gefüllt, die genaue Masse wird durch Rückwaage ermittelt. Der Katholyt ist immer eine 5mmol/L LiOH Lösung. Der Anolyt ist jeweils eine Lithiumsalzlösung in verschiedenen Konzentrationen und verschiedenen Lithiumsalzen.

Durch Einschalten der Pumpen und der gewünschten Spannung wird der Versuch gestartet. Die maximale Durchflussgeschwindigkeit beträgt zwischen 750 mL/min und 1000 mL/min, je nachdem wie der jeweilige Versuch gestaltet wurde. Die Probenahme erfolgt halbstündlich oder nach Absprache in größeren Zeitintervallen. Es werden 3mL Vorlauf gezogen und verworfen. Bei jeder Probenahme wird der jeweilige Strom notiert und von der Probe wird die Leitfähigkeit bestimmt. Anschließend werden die Proben in die entsprechenden Behälter zurückgegeben, um das Volumen nahezu konstant zu halten.

Nach Ende des Versuches werden die Behälter entleert und alle Leitungen und auch die Membran werden mit VE-Wasser gespült. Die Zelle wird auseinander gebaut, Membran wird fotografiert und es werden REM-Aufnahmen von Katholyt- und Anolyt-Seite gemacht.

Die Membranperformance wird an den Kenngrößen der Permeabilität (g Li*mm/m$^2$*h) und Permeanz (g Li/m$^2$*h) gemessen. Die Permeanz gibt an, wie viel Masse an Lithium pro Membranfläche und Zeit durch die Membran transportiert werden. Die Permeabilität bezieht noch die Membrandicke mit ein und ermöglicht es somit auch unterschiedliche Membrantypen mit verschiedenen Dicken miteinander zu vergleichen. Man benötigt beide Angaben zur umfänglichen Beschreibung der Performance, da extrem dünne Membranen eine enorm hohe Permeanz ermöglichen würden, aber sofern es zu Konzentrationspolarisationseffekten in der Membranzelle kommt, würden die Permeabilitäten falsch wiedergegeben. Die Berücksichtigung der Membrandicke ist dann nicht mehr Zielführend, da der Transport nicht durch die Membran limitiert ist.

Alle in den Beispielen gezeigten Messwerte sind mit einem Mess-Fehler von ca. +/- 10% behaftet, der sich auf Ungenauigkeiten der Positionierung der Elektroden zueinander, der Bestimmungen der Dicke der Membranproben und der Konzentrationsbestimmung über Leitfähigkeitsmessungen zurückführen lässt.

Alle verwendeten Keramiken stammen von den in Tabelle 0 aufgeführten Herstellern und sind dort unter den entsprechenden Produktnamen bestellbar.

**Tabelle 0:** Verwendete Keramiken und deren Hersteller

| Hersteller | Produktname | Beschreibung | Stöchiometrie |
|---|---|---|---|
| OHARA GmbH | LICGC® PW01 | Ohara LiCGC® Pulver PW01 | $Li_{1,75}Al_{0,6}Ti_{1,4}Si_{0,15}P_{2,85}O_{12}$ |
| OHARA GmbH | AG01 | Ohara LiCGC® Keramik AG01 | $Li_2O\text{-}Al_2O_3\text{-}SiO_2\text{-}P_2O_5\text{-}TiO_2\text{-}GeO_2$ |
| OHARA GmbH | SP01 | Ohara LiCGC® Keramik SP01 | $Li_2O\text{-}Al_2O_3\text{-}SiO_2\text{-}P_2O_5\text{-}TiO_2$ |
| Ampcera™ (sold by MSE Supplies) | LISICON LAGP Solid State Electrolyte Membrane for Advanced Lithium Batteries, diameter d=25.4 mm 0.3 mm thickness | Ampcera LAGP Keramik | $Li_{1.5}Al_{0.5}Ge_{1.5}(PO_4)_3,$ |

Lithiumhydroxid wurde von Aldrich in p.a. Qualität verwendet. Alle anderen Stoffe in technischen Qualitäten.

Sofern es nicht anders angegeben ist, wurden ca. 1mm dicke Membranen aus LATSP (LICGC®, Fa. Ohara) verwendet. Die Membranscheiben wurden durch eine SPS-Sinterverfahren bei einem Druck von $100*10^5$ Pa bis $200*10^5$ Pa und einer Temperatur von 950°C hergestellt, oder alternativ direkt in der für die Messzellen passenden Größe von verschiedenen Herstellern (Ohara, Ampcera, Toshima) bezogen.

**Beschreibung des Sinterverfahrens:**

Sinterung mittels FAST/SPS

Das verwendete LATSP Pulver wird mittels FAST/SPS (engl.: field assisted sintering technology/ spark plasma sintering) versintert. Die Sinterung wird mit einem Druck- und Temperaturanstieg simultan durchgeführt, um eine hohe Verdichtung und eine effektive Sinterung in sehr kurzer Sinterzeit zu erzielen. Der Aufbau der Sinterform besteht aus einer Graphit-Matrize mit einem Außendurchmesser von 80 mm, einem Innendurchmesser von 36 mm und einer Höhe von 55 mm, zwei Graphithalbschalen mit einer Wandstärke von 10 mm und dergleichen Höhe und zwei Graphit-Stempeln mit einem Durchmesser von 25 mm und einer Höhe von 30 mm. Die Halbschalen werden in die Matrize positioniert und ein Stempel von der Unterseite in die Halbschalen eingeführt. Bevor 2.5 g des Pulvers in die Matrize auf den unteren Stempel abgewogen werden, wird zur Verbesserung der Kontaktierung Graphitfolie auf den Stempel positioniert. Ist das Pulver eingewogen, wird eine zweite Graphitfolie auf dem Pulver positioniert und der obere Stempel in die Halbschalen eingeführt. Der Matrizenaufbau wird in der Ofenkammer des FAST/SPS-Ofens zwischen je zwei Platten aus kohlefaserverstärktem Grafit positioniert. Über den Verfahrweg der Elektroden wird der Aufbau kontaktiert und der gewünschte Druck aufgebaut. Zudem wird die Matrize über einen Wechselstrom erhitzt, wodurch in kurzer Zeit hohe Temperaturen erreicht werden. Nach einer langsamen Temperatursteigerung auf 250 °C über fünf Minuten wird mit einer Heizrate von 130 °C/min die Maximaltemperatur von 900 °C, welche für weitere fünf Minuten gehalten wird, erreicht. Während des Temperaturanstiegs wird auch der Druck innerhalb von fünf Minuten auf 43 MPa erhöht, welcher ebenfalls fünf Minuten gehalten wird. Am Ende der Haltezeit wird der Kontakt der oberen Elektrode von der Matrize gelöst und die Matrize kühlt ab. Anschließend kann die gesinterte Membran aus der Form herausgelöst werden.

**Beispiel 1 (LATSP)**

Zunächst wurde die Spannungsabhängigkeit der keramischen Membranen während der Elektrolyse untersucht. Die Elektrolysen wurden jeweils mit 0.1mol/L LiOH und 1mol/L LiOH durchgeführt bei Spannungen von 3 V bis 6 V, bei einem Volumenstrom durch die Elektrolysezelle von 600mL/min. Die Messergebnisse sind in Tabelle 1 dargestellt.

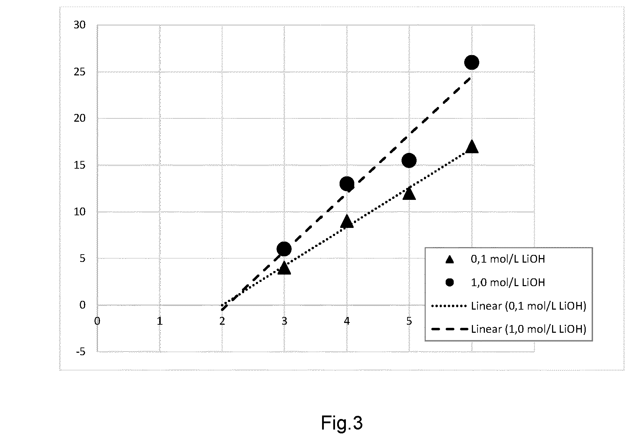

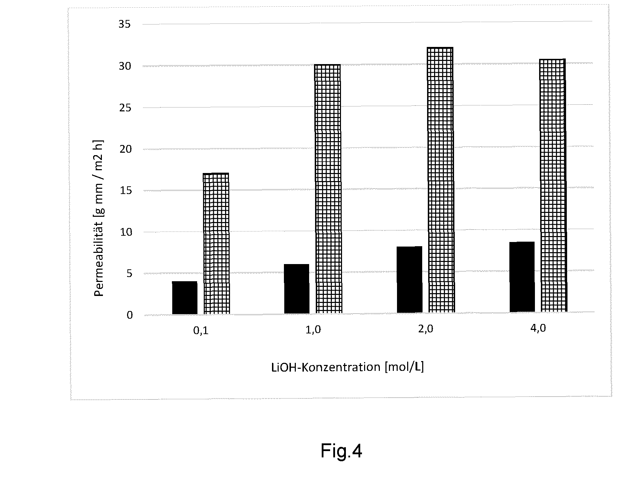

Bei grafischem Auftragen der Werte wird der lineare Zusammenhang deutlich. Der Schnittpunkt der Geraden der x-Achse bei ca. 2 V ergibt sich aus der Zersetzungsspannung des Wassers und den Innenwiderstände der Zelle. Dieser Schnittpunkt ist bei beiden Konzentrationen nahezu identisch. Die Graphik ist in Figur 3 dargestellt.

**Tabelle 1:** Spannungsabhängigkeit der Elektrolysen mit keramischen Membranen

| | Permeabilität | |
|---|---|---|
| Spannung | (g Li*mm/m$^2$*h) | |
| [V] | 0.1 mol/L | 1 mol/L |
| 3 | 4 | 6 |
| 4 | 9 | 13 |
| 5 | 12 | 15.5 |
| 6 | 17 | 26 |

**Beispiel 2 (LATSP)**

Außerdem wurde festgestellt, dass die Membranperformance unabhängig von der Anolyt-Konzentration ist. Dazu wurden Elektrolysen jeweils mit 0.1; 1.0; 2.0mol/L LiOH und 4.0mol/L LiOH, welches im Anolyt-Behälter vorgelegt wurde, bei Spannungen von 3 V und 6 V und bei einem Anolyt-Volumenstrom durch die Elektrolysezelle von 600mL/min durchgeführt.

Die molaren Anteile an LiOH entsprechen den folgenden Gewichtsanteile an Li:

0.1 mol/L = 700 ppm Li = 2400 ppm LiOH
1.0 mol/L = 7000 ppm Li = 24000 ppm LiOH
2.0 mol/L =14000 ppm Li = 48000 ppm LiOH
4.0 mol/L =28000 ppm Li = 96000 ppm LiOH

Die Messerergebnisse sind in Tabelle 2 dargestellt. Bei Konzentrationen von 1 mol/L bis 4 mol/L wird keine signifikante Steigerung der Membranperformance gemessen. Eine LiOH Konzentration von 0.1 mol/L erreicht eine leicht geringere Performance. Eine graphische Darstellung zeigt Figur 4.

**Tabelle 2:** Keine Abhängigkeit von Anolyt-Konzentration

| Konzentration | Permeabilität | |
|---|---|---|
| [mol/L] | (gLi*mm/m$^2$*h) | |
| | 3 V | 6 V |
| 0.1 | 4 | 17 |
| 1 | 6 | 30 |
| 2 | 8 | 32 |
| 4 | 8.5 | 30.5 |

**Beispiel 3 (LATSP)**

Aus den Ergebnissen der Versuche in den Beispielen 1 und 2 kann man entnehmen, dass die Permeabilität des Lithiums durch die keramische ionenleitende Membran von der Konzentration abhängig ist, obwohl die Triebkraft des Prozesses die angelegte Spannungsdifferenz ist. Um dieses Verhalten besser zu beschreiben, wurden weiterführende Versuche durchgeführt. Diese wurden auch in einem Bereich mit größeren Spannungen, zwischen 3V und 15V ausgeführt Der Volumenstrom durch die Anolyt-Kammer der Zelle lag bei 600 mL/min und die verwendeten Anolyt-Konzentrationen bei 0.1 mol/L LiOH, 1.0 mol/L LiOH und 4.0 mol/L LiOH.

Die Ergebnisse der Untersuchung sind in Tabelle 3 zusammengefasst:

**Tabelle 3:** Permeabilität in Abhängigkeit der Spannung von LATSP

| | Permeabilität [g mm / m$^2$ h] | | |
|---|---|---|---|
| Spannung [V] | 0.1 mol/L | 1.0 mol/L | 4.0 mol/L |
| 3.0 | 6 | 6 | 8.5 |

(fortgesetzt)

| | Permeabilität [g mm / m$^2$ h] | | |
|---|---|---|---|
| 6.0 | 22 | 29.5 | 32 |
| 9.0 | 41.5 | 50.5 | 41 |
| 12.0 | 23 | 65 | 73 |
| 15.0 | | 52 | 50 |

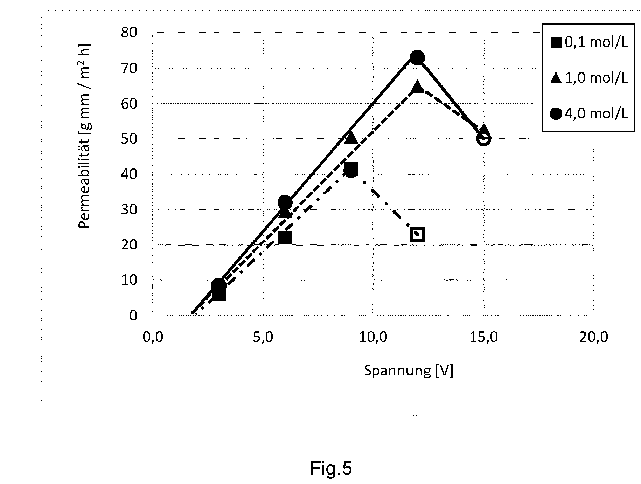

Eine graphische Darstellung der Ergebnisse bietet Figur 5.

Ab einer bestimmten Spannung, oberhalb von 9 Volt, lässt sich die Permeabilität durch die verwendete LATSP-Membran nicht weiter steigern, sondern reduziert sich deutlich. Da diese Grenze für die 0.1 mol/L LiOH-Lösung als Anolyt bei niedrigeren Spannungen und geringeren Permeabilitäten erreicht zu sein scheint, wurde gefolgert, dass es sich ab dieser Grenze um eine Begrenzung des Lithium Transports aufgrund eines nicht ausreichend schnellen Transports von Lithium an die Membranoberfläche der dem Anolyten zugewandten Seite handelt.

**Beispiel 4 (LAGP)**

Wiederholungen des Beispiels 3 mit einem anderen keramischen, ionenleitenden Material (LAGP) mit 0.3mm Materialdicke und einer Konzentration im Anolyten von 0.1 mol/L LiOH und einem Anolyt-Volumenstrom durch die Elektrolysezelle von 600mL/min zeigen ein vergleichbares Bild. Auch hier ist ab einer bestimmten Grenze eine weitere Steigerung der Permeabilität mit zunehmender Spannung nicht möglich.

Die Ergebnisse sind in Tabelle 4 zusammengefasst.

**Tabelle 4:** Permeabilität in Abhängigkeit der Spannung von LAGP

| LAGP | |
|---|---|
| Spannung [V] | Permeabilität [g mm / m$^2$ h] |
| 3 | 1.7 |
| 5 | 4.8 |
| 6 | 9 |
| 7 | 14.9 |
| 9 | 19.7 |
| 12 | 8.7 |

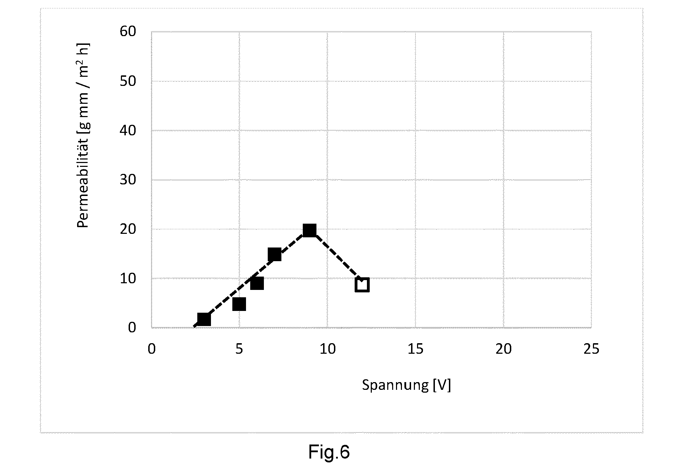

Eine graphische Darstellung der Ergebnisse bietet Figur 6.

**Beispiel 5 (LATSP)**

Eine Versuchsreihe mit 1.0 mol/L LiOH im Anolyten und 600 mL/min Volumenstrom und unterschiedlich dicken Membranen zeigt bei der Betrachtung der Permeanz, dass die Ursache im begrenzten Lithium-Ionen-Transport zur Oberfläche der Anolyt-seitigen Membranoberfläche ist. Der Bereich, ab dem eine Steigerung nicht mehr möglich ist, ist bei allen Versuchsreihen im Bereich von 60 bis 75 g / m$^2$ h.

Im gegebenen Versuchsaufbau ist somit eine Steigerung des Lithiumtransportes durch Erhöhung der Spannungsdifferenz über diese Grenze hinweg nicht möglich.

Die Ergebnisse sind in Tabelle 5 zusammengefasst.

**Tabelle 5:** Permeanz in Abhängigkeit der Spannung von LATSP

| | Permeanz [g / m$^2$ h] | | |
|---|---|---|---|
| Spannung [V] | 1mm | 0.76 mm | 0.5 mm |
| 3.0 | 6.0 | 6.7 | 14.0 |

(fortgesetzt)

| | Permeanz [g / m² h] | | |
|---|---|---|---|
| Spannung [V] | 1mm | 0.76 mm | 0.5 mm |
| 4.5 | 13.0 | | |
| 6.0 | 29.0 | 33.9 | 50.0 |
| 6.0 | 30.0 | | |
| 9.0 | 52.0 | 54.6 | 75.0 |
| 12.0 | 64.0 | 56.8 | 56.0 |
| 15.0 | 50.0 | 45.7 | 30.0 |

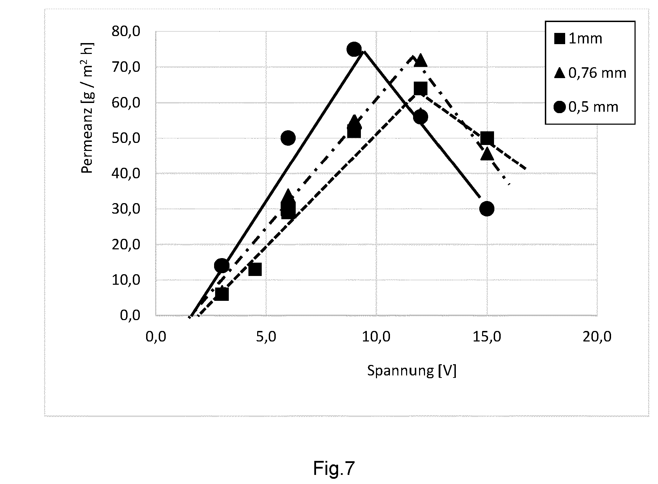

Eine graphische Darstellung der Ergebnisse bietet Figur 7.

**Beispiel 6 (LATSP)**

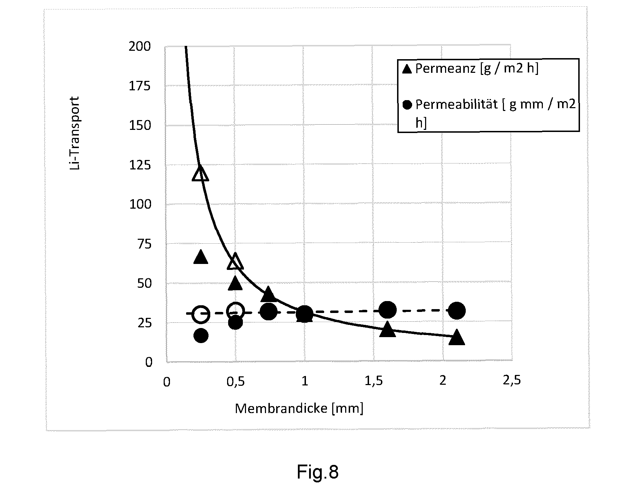

Eine Versuchsreihe mit 1.0 mol/L LiOH im Anolyten und 600 mL/min Volumenstrom und unterschiedlich dicken Membranen bei 6 V zeigt bei der Betrachtung der Permeanz und der Permeabilität, dass diese bis zu einer Membrandicke von 0.75mm wie erwartet durch über diese miteinander im Zusammenhang stehen. Bei dünneren Membranen weichen beide zu kleineren Werten hin, vom erwarteten und in Figur 8 als extrapolierte Werte (ohne Füllung) dargestellten Verhalten, ab. Die Werte sind in Tabelle 6 dargestellt:

**Tabelle 6** : Permeanz und Permeabilität in Abhängigkeit der Membrandicke

| Membrandicke [mm] | Permeanz [g / m² h] | Permeabilität [g mm / m² h] | Kommentar |
|---|---|---|---|
| 2.10 | 15 | 32 | |
| 1.60 | 20 | 32 | |
| 1.00 | 30 | 30 | |
| 0.74 | 43 | 32 | |
| *0.50* | 50 | 25 | |
| *0.25* | 67 | 17 | |
| *0.50* | 64 | 32 | *Extrapolierter Erwartungswert* |
| *0.25* | *120* | 32 | *Extrapolierter Erwartungswert* |

Eine graphische Darstellung der Ergebnisse bietet Figur 8.
Die verschiedenen Beispiele 1 bis 6 zeigen, dass eine technisch gewünschte hohe Permeanz für Lithium nicht allein durch eine dünne Membrane oder eine hohe Spannung und auch nicht durch Auswahl einer möglichst gut Lithium-leitenden Keramik erreicht werden kann, sondern dass weitere Maßnahmen ergriffen werden müssen, um dieses zu realisieren.

**Beispiel 7 (LATSP)**

Bei Elektrolyseversuchen mit einer 0.1 mol/L und 1.0 mol/L LiOH-Lösung als Anolyt bei einer Spannung von 3V und unterschiedlichen Volumenströmen, wurde bereits eine Abhängigkeit des Lithium-Transports durch die Membrane vom Volumenstrom, also somit auch der Überströmungsgeschwindigkeit, auch schon bei geringen Permeanzen beobachtet.
Die Ergebnisse sind in Tabelle 7 zusammengestellt.

**Tabelle 7:** Abhängigkeit der Permeanz von Volumenstrom bei LATSP

| Konzentration [mol/L LiOH] | Volumenstrom [mL/min] | Permeanz [g/m2 h] |
|---|---|---|
| 1 | 50 | 4.5 |

(fortgesetzt)

| Konzentration [mol/L LiOH] | Volumenstrom [mL/min] | Permeanz [g/m2 h] |
|---|---|---|
| 1 | 250 | 5 |
| 1 | 900 | 6.2 |
| 0.1 | 50 | 2.6 |
| 0.1 | 250 | 3.1 |
| 0.1 | 900 | 6.2 |

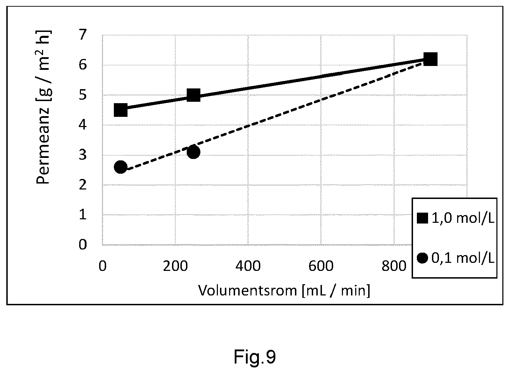

Eine graphische Darstellung der Ergebnisse bietet Figur 9.

**Beispiel 9 (LAGP)**

Diese Ergebnisse legen nahe, dass überraschenderweise der Übergang von Lithium aus der Strömung zur Membranoberfläche bereits bei sehr geringen Spannungen und Permeanzen einen signifikanten Einfluss auf die Gesamtperformance des Prozesses hat. Der Übergang zur Oberfläche wird durch die Überströmungsgeschwindigkeit an der Oberfläche der Membrane und somit durch den Volumenstrom, welcher durch die Anolyt-Zelle fließt, gesteuert.

Eine weitere Steigerung des Volumenstromes bei einer Spannung von 6V und einer Anolyt-Konzentration von 1.0 mol/L LiOH zeigte, dass sich hierdurch der Lithiumtransport (Permeanz) über die zuvor gefundene Grenze hinweg steigern lässt, auf mehr als 110 $g_{Li}/m^2$ h.

Die Ergebnisse sind in Tabelle 8 zusammengestellt.

**Tabelle 8:** Abhängigkeit der Permeanz von Volumenstrom bei LAGP

| Konzentration [mol/L LiOH] | Volumenstrom [mL/min] | Permeanz [g/m$^2$ h] |
|---|---|---|
| 1 | 750 | 71 |
| 1 | 500 | 50 |
| 1 | 200 | 38 |
| 1 | 70 | 24 |
| 1 | 1000 | 111 |

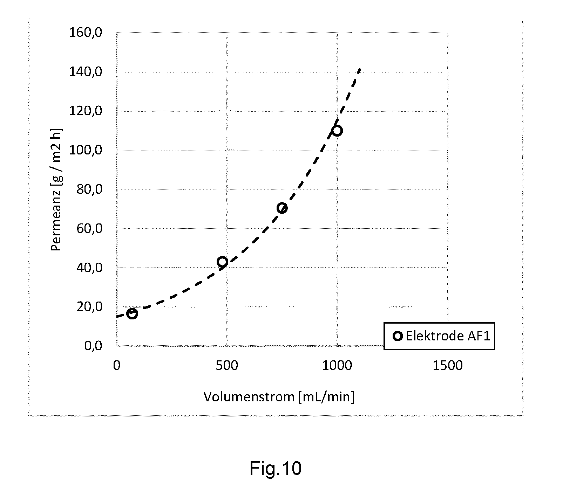

Eine graphische Darstellung der Ergebnisse bietet Figur 10.

**Beispiel 10 (LAGP)**

Eine weitere Steigerung des Volumenstromes bei einer Spannung von 6V und einer Anolyt-Konzentration von 1.0 mol/L LiOH ließ sich im apparativen Aufbau nicht umsetzen. Daher wurden als weitere Maßnahmen der Einsatz alternativer Elektrodengeometrien und Spacer-Materialien geprüft.

Die Spacer sind von folgenden Firmen zu beziehen:

Feiner Spacer (72% offen)
SWM; 601 Industrieal Drive, Middeltown, DE 19709, USA
Typ Naltex N02016_90PP

Grober Spacer (55% offen)
INTERMAS NETS S.A.
Ronda Collsabadell, no11, 08450 LLinars del Valles (Barcelona), Spain

Der Einbau des feines Spacers bewirkt eine Reduktion der Spalthöhe von 2.5 mm auf 1.8 mm, währenddessen der grobe Spacer die Spalthöhe auf 1.5 mm reduziert. Die Breite der Membran von 14 mm bleibt durch den Einbau der Spacer unverändert.

Die Ergebnisse der Untersuchungen bei einem Volumenstrom von 70 bis 750mL/min, 6V und mit einer 1 mol/L LiOH-Lösung zeigt Tabelle 9.

In allen Anordnungen konnte mit steigendem Volumenstrom der Lithium-Transport durch die Membrane gesteigert werden. Anhand der Ergebnisse kann man erkennen, dass bei der Spannung von 6V, der Transport von der Elektrodenfläche und der offen zugängigen Fläche der Membran (nicht durch Stege des Spacers verdeckte) abhängig ist. Eine Steigerung der Permeanz durch Einbringen von Spacern, die für eine stärke Durchmischung des Feed-Volumenstromes sorgen sollte ist nicht erkennbar.

Die Entwicklung der Permeanzen weist darauf hin, dass ab ca. 1000 mL/min Volumenstrom in der Anolyt-Kammer sich diese bei allen Verfahrensarten annähern. Somit kann man davon ausgehen, dass ab diesem Volumenstrom ausschließlich der Transport durch die keramische Lithium-Ionen leitende Membrane geschwindigkeitsbestimmend ist.

**Tabelle 9:** Einfluss der Spacer auf die Überströmungsgeschwindigkeit und die Permeanz

| Elektrode / Spacer | Breite | Höhe | Volumenstrom | Permeanz | Überströmungsgeschwindigkeit |
|---|---|---|---|---|---|
| | [mm] | [mm] | [mL/min] | [g / m$^2$ h] | [mm/s] |
| flächige Elektrode | 14 | 2.5 | 70 | 20.8 | 33.3 |
| flächige Elektrode | 14 | 2.5 | 200 | 32.5 | 95.2 |
| flächige Elektrode | 14 | 2.5 | 480 | 47.8 | 228.6 |
| flächige Elektrode | 14 | 2.5 | 750 | 74.7 | 357.1 |
| Elektrode AF1 | 14 | 2.5 | 70 | 16.5 | 33.3 |
| Elektrode AF1 | 14 | 2.5 | 480 | 43 | 228.6 |
| Elektrode AF1 | 14 | 2.5 | 750 | 70.5 | 357.1 |
| Elektrode AF1 | 14 | 2.5 | 1000 | 110 | 476.2 |
| AF1 / Spacer 72% offen | 14 | 1.8 | 70 | 5.1 | 46.3 |
| AF1 / Spacer 72% offen | 14 | 1.8 | 200 | 15.3 | 132.3 |
| AF1 / Spacer 72% offen | 14 | 1.8 | 480 | 25.7 | 317.5 |
| AF1 / Spacer 72% offen | 14 | 1.8 | 750 | 43.6 | 496.0 |
| AF1 / Spacer 55% offen | 14 | 1.5 | 70 | 1.7 | 55.6 |
| AF1 / Spacer 55% offen | 14 | 1.5 | 200 | 3.2 | 158.7 |
| AF1 / Spacer 55% offen | 14 | 1.5 | 480 | 13.2 | 381.0 |
| AF1 / Spacer 55% offen | 14 | 1.5 | 750 | 31 | 595.2 |

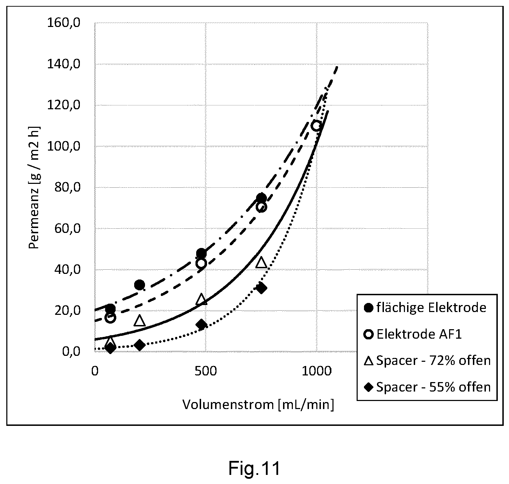

In Figur 11 sind die gemessenen Permeanzen über die Volumenströme graphisch dargestellt.

**Beispiel 11 (LAGP)**

Bei einem Volumenstrom von 1000 mL/min wurde die Spannung schrittweise erhöht. Hierbei zeigt sich, dass die verwendete grobe Spacergeometrie (55% offen) soweit für eine gute Durchmischung des 1.0 mol/L LiOH enthaltenden Feed auf der Membranoberfläche sorgt, dass sich durch Steigerung der Spannung eine Permeanz von mehr als 300 g$_{Li}$/m$^2$ h bei 15V erreicht werden konnte, bevor dies bei noch höheren Spannungen zum bekannten Abfallen der Permeanz führt.

Ein Versuch, dies bei gleichem Volumenstrom mit einer flächigen Elektrode ohne Spacer zu erreichen, führte bei den betrachteten hohen Spannungen zu vergleichbaren Ergebnissen.

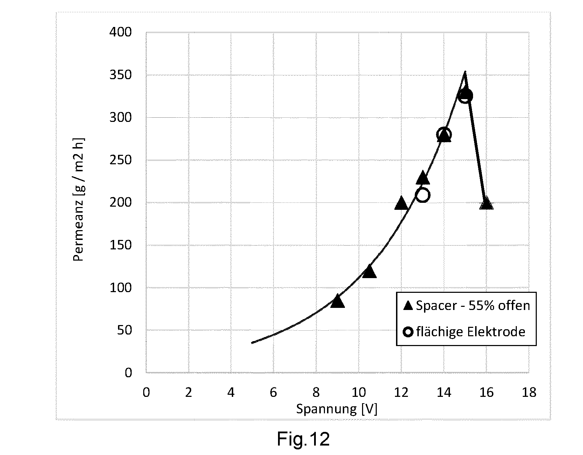

In Figur 12 sind die Permeanzen in Abhängigkeit von der Spannung einmal mit Spacer (▲) und einmal ohne Spacer (O) dargestellt. Die Werte sind in Tabelle 10 dargelegt.

**Tabelle 10:** Einfluss der Spacer und der Spannung auf die die Permeanz

| Elektrode / Spacer | Spannung M | VolumenStrom [mL/min] | Permeanz [g / m$^2$ h] |
|---|---|---|---|
| flächige Elektrode | 6 | 70 | 20,8 |
| flächige Elektrode | 6 | 200 | 32,5 |

(fortgesetzt)

| Elektrode / Spacer | Spannung M | VolumenStrom [mL/min] | Permeanz [g / m² h] |
|---|---|---|---|
| flächige Elektrode | 6 | 480 | 47,8 |
| flächige Elektrode | 6 | 750 | 74,7 |
| flächige Elektrode | 13 | 1000 | 209 |
| flächige Elektrode | 14 | 1000 | 280 |
| flächige Elektrode | 15 | 1000 | 325 |
| flächige Elektrode | 16 | 1000 | 220 |
| AF1 / Spacer 55% offen | 6 | 750 | 31,0 |
| AF1 / Spacer 55% offen | 9 | 1000 | 85 |
| AF1 / Spacer 55% offen | 10,5 | 1000 | 120 |
| AF1 / Spacer 55% offen | 12 | 1000 | 200 |
| AF1 / Spacer 55% offen | 13 | 1000 | 230 |
| AF1 / Spacer 55% offen | 14 | 1000 | 280 |
| AF1 / Spacer 55% offen | 15 | 1000 | 330 |
| AF1 / Spacer 55% offen | 16 | 1000 | 200 |

Es konnte hierdurch gezeigt werden, dass durch Einstellen einer möglichst hohen Überströmungsgeschwindigkeit bzw. Volumenstromes die Permeanz von LiSICon-Membranen in der Anwendung in einer Membranelektrolyse deutlich gesteigert werden kann, so dass eine wirtschaftliche Anwendung möglich wird. Überraschenderweise sind Spacer, wie sie üblicherweise in Membranelektrolysen zwischen polymerer Ionentauschmembran und Elektrode eingesetzt werden nicht notwendig, da bei Verwendung keramischer Membranen diese formstabil sind und somit einen definierten Strömungskanal offenhalten. Spacer sind in Kombination mit keramischen Membranen dann eher weniger bevorzugt, da diese einen Teil der Austauschfläche durch die polymeren Stege blockieren.

**Beispiel 12 (LAGP)**

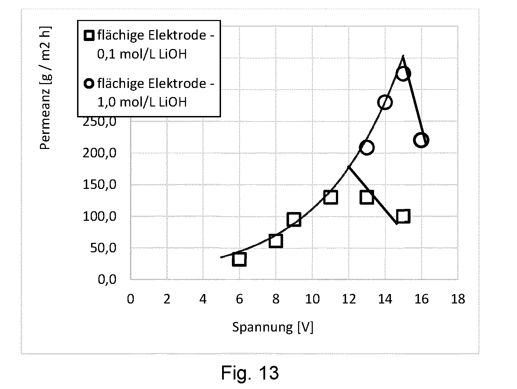

Eine Wiederholung des Versuchs 11 nur mit einer Anolyt-Lösung mit einer Konzentration von 0.1mol/L LiOH führte bei Verwendung einer flächigen Elektrode zu den in Tabelle 11 und Figur 13, Datenpunkte □ dargestellten Ergebnissen.

**Tabelle 11:** Einfluss der Spannung auf die die Permeanz

| Spannung [V] | Volumenstrom [mL/min] | Permeanz [g / m² h] |
|---|---|---|
| 6 | 1000 | 32,0 |
| 8 | 1000 | 61,0 |
| 9 | 1000 | 95,0 |
| 11 | 1000 | 130,0 |
| 13 | 1000 | 130 |
| 15 | 1000 | 100 |

Auch hier ist die Permeanz durch eine Steigerung der Spannung zu steigern. Aber wie bereits zuvor in Beispiel 11 gezeigt, ist ab einer gewissen Grenze die Permeanz nicht weiter steigerbar und bei weiterer Spannungssteigerung kommt es zu einem Einbruch der Permeanz. Die Grenze der Permeanz liegt niedriger als bei Verwendung einer 1.0 mol/L Lösung wie in Beispiel 11 gezeigt (vgl. Datenpunkte O), ist aber mehr als doppelt so hoch wie vergleichbaren Versuchen mit geringerer Überströmungsgeschwindigkeit.

Es konnte hierdurch bestätigt werden, dass durch Einstellen einer möglichst hohen Überströmungsgeschwindigkeit bzw. Volumenstromes die Permeanz von LiSICon-Membranen in der Anwendung in einer Membranelektrolyse deutlich gesteigert werden kann, so dass eine wirtschaftliche Anwendung möglich wird.

**Bezugszeichenliste**

| | |
|---|---|
| 0 | elektrochemische Zelle |
| 1 | erstes Kompartiment |
| 2 | zweites Kompartiment |
| 3 | Membran |
| 4 | Anode |
| 5 | Kathode |
| 6 | erste elektrische Leitung |
| 7 | Spannungsquelle |
| 8 | zweite elektrische Leitung |
| 9 | nicht vergeben |
| 10 | Feed |
| 11 | nicht vergeben |
| 12 | armes Arbeitsmedium |
| 13 | reiches Arbeitsmedium |
| 14 | Abwasser |
| 15 | Zielprodukt |
| 16 | Trennapparat |

| | |
|---|---|
| $H_2O$ | Wasser |
| $H_2$ | Wasserstoff |
| $O_2$ | Sauerstoff |
| LiOH | Lithiumhydroxid |
| $OH^-$ | OH-Anionen |
| $Li^+$ | Lithium Kationen |

| | |
|---|---|
| $U$ | elektrische Spannung |
| $I$ | elektrischer Strom |
| $A$ | aktive Fläche |
| $C_F$ | Konzentration LiOH im Feed |
| Cw | Konzentration LiOH im Abwasser |
| $C_{M0}$ | Konzentration LiOH im armen Arbeitsmedium |
| $C_{M1}$ | Konzentration LiOH im reichen Arbeitsmedium |

| | |
|---|---|
| $b$ | Breite der Membran quer zur Strömungsrichtung |
| $h$ | Höhe des Spalts zwischen Membran und Anode |
| $Q$ | Volumenstrom durch das erste Kompartiment |
| CFV | Überströmungsgeschwindigkeit |

**Patentansprüche**

1. Verfahren zur Herstellung von Wasserstoff und Lithiumhydroxid mit den folgenden Schritten:

a) Bereitstellen eines Feed enthaltend zumindest Wasser, Li-Ionen, sowie Verunreinigungen, wobei die Konzentration von Li-Ionen in dem Feed $C_F$ mindestens 200 Gew.-ppm oder zwischen 500 Gew.-ppm und 140000 Gew.-ppm beträgt, jeweils bezogen auf das Gesamtgewicht des Feeds;

b) Bereitstellen eines armen Arbeitsmediums enthaltend Wasser und darin gelöst Lithiumhydroxid, wobei die Konzentration von Lithiumhydroxid in dem armen Arbeitsmedium $C_{M0}$ bezogen auf das Gesamtgewicht des armen Arbeitsmediums mindestens 50 Gew.-ppm beträgt;

c) Bereitstellen von mindestens einer elektrochemischen Zelle, wobei die elektrochemische Zelle die folgenden Merkmale aufweist:

v. die elektrochemische Zelle umfasst ein erstes Kompartiment, in dem eine Anode angeordnet ist;

vi. die elektrochemische Zelle umfasst ein zweites Kompartiment, in dem eine Kathode angeordnet ist;

vii. die elektrochemische Zelle umfasst eine Flachmembran, welche das erste Kompartiment von dem

19

zweiten Kompartiment trennt, wobei die Flachmembran die Fläche A aufweist;

viii. die Flachmembran enthält ein anorganisches Material, welches eine Leitfähigkeit für Li-Ionen besitzt und welches elektrisch isolierend ist;

d) Bereitstellen von mindestens einer elektrischen Spannungsquelle, welche über eine erste elektrische Leitung mit der Anode und über eine zweite elektrische Leitung mit der Kathode verbunden ist;

e) Kontinuierliches Beaufschlagen des ersten Kompartiments mit dem Feed;

f) Beaufschlagen des zweiten Kompartiments mit dem armen Arbeitsmedium;

g) Beaufschlagen der elektrochemischen Zelle mit einer von der elektrischen Spannungsquelle bezogenen elektrischen Spannung U, dergestalt, dass ein elektrischer Strom $I$ zwischen Anode und Kathode fließt, wobei der Quotient Q aus der Stromstärke des elektrischen Stroms $I$ und der Fläche A der Flachmembran zwischen 100 $A/m^2$ und 500 $A/m^2$ oder zwischen 150 $A/m^2$ und 350 $A/m^2$ beträgt;

h) Kontinuierliches Abziehen von Abwasser enthaltend zumindest Wasser, darin gelöste Li-Salze, Sauerstoff, sowie Verunreinigungen aus dem ersten Kompartiment, wobei die Konzentration von Li-Ionen in dem Abwasser Cw bezogen auf das Gesamtgewicht des Abwassers geringer ist als die Konzentration von Li-Ionen im Feed $C_F$;

i) Abziehen eines reichen Arbeitsmediums enthaltend Wasser und Lithiumhydroxid sowie von Wasserstoff aus dem zweiten Kompartiment, wobei die Konzentration von Lithiumhydroxid in dem reichen Arbeitsmedium $C_{M1}$ bezogen auf das Gesamtgewicht des reichen Arbeitsmediums größer ist als die Konzentration im von Lithiumhydroxid in dem armen Arbeitsmedium $C_{M0}$;

wobei durch das kontinuierliche Beaufschlagen des ersten Kompartiments mit dem Feed und durch das kontinuierliche Abziehen des Abwassers aus dem ersten Kompartiment eine erste Strömung entsteht, die mit einer Überströmgeschwindigkeit $CFV$ durch das erste Kompartiment an der Flachmembran entlang strömt, wobei die Überströmgeschwindigkeit $CFV$ größer ist als 220 mm/s oder größer ist als 350 mm/s oder größer ist als 470 mm/s, und wobei die Überströmgeschwindigkeit $CFV$ kleiner ist als eine Grenzgeschwindigkeit, wobei die Grenzgeschwindigkeit ausgewählt ist aus der Gruppe bestehend aus den folgenden Grenzgeschwindigkeiten: 600 mm/s, 960 mm/s, 1500 mm/s, 2400 mm/s, 3780 mm/s, 6000 mm/s.

2. Verfahren nach Anspruch 1, **dadurch gekennzeichnet, dass** das erste Kompartiment frei von Strömungseinbauten ist.

3. Verfahren nach Anspruch 2, **dadurch gekennzeichnet, dass** das erste Kompartiment frei von Spacern ist.

4. Verfahren nach einem der Ansprüche 1 bis 3, **dadurch gekennzeichnet, dass** die Flachmembran in ein Flachmodul eingebaut ist.

5. Verfahren nach einem der Ansprüche 1 bis 4, **dadurch gekennzeichnet, dass** der Feed Anionen enthält, welche ausgewählt sind aus der Gruppe bestehend aus Sulfat, Carbonat, Hydroxid, Chlorid.

6. Verfahren nach einem der Ansprüche 1 bis 5, **dadurch gekennzeichnet, dass** der Feed Verunreinigungen in Gestalt von Verbindungen von Elementen enthält, welche ausgewählt sind aus der Gruppe bestehend aus B, Na, Mg, Al, Si, K, Ca, Mn, Fe, Co, Ni, Cu, C.

7. Verfahren nach einem der vorhergehenden Ansprüche, wobei das in der Flachmembran enthaltene anorganische Material eine nach der hier beschriebenen Methode "Impedanz Spektroskopie" gemessene Leitfähigkeit für Li-Ionen besitzt, die bei einer Temperatur von 23°C mindestens $1*10^5$ S/m oder mindestens $5*10^{-5}$ S/m oder mindestens $10*10^{-5}$ S/m und maximal $100*10^{-5}$ S/m beträgt.

8. Verfahren nach Anspruch 7, **dadurch gekennzeichnet, dass** es sich bei dem anorganischen Material um eine Verbindung der folgenden Stöchiometrie (LATP) handelt:

$$Li_{1+x}Al_xTi_{2-x}(PO_4)_3$$

worin gilt: $0.1 \leq x \leq 0.3$, wobei bevorzugt gilt x=0.3.

9. Verfahren nach Anspruch 7, **dadurch gekennzeichnet, dass** es sich bei dem anorganischen Material um eine Verbindung der folgenden Stöchiometrie (LATSP) handelt:

$$Li_{1+x+y}Al_xTi_{2-x}Si_yP_{3-y}O_{12}$$

worin gilt: $0.1 \leq x \leq 0.3$ und $0.2 \leq y \leq 0.4$.

10. Verfahren nach Anspruch 7, **dadurch gekennzeichnet, dass** es sich bei dem anorganischen Material um eine Verbindung der folgenden Stöchiometrie (LAGTSP) handelt:

$$Li_{1+x+y}Al_xTi_{2-x}Si_yP_{3-y}O_{12} * nGeO_2$$

worin gilt: $0 \leq x \leq 1$ und $0 \leq y \leq 1$ und $0 \leq n \leq 1$

11. Verfahren nach Anspruch 7, **dadurch gekennzeichnet, dass** es sich bei dem anorganischen Material um eine Verbindung der folgenden Stöchiometrie (LAGTP) handelt:

$$Li_{1.4}Al_{0.4}(Ge_{1-x}Ti_x)_{1.6} (PO_4)_3$$

worin gilt: $0 \leq x \leq 1$.

12. Verfahren nach Anspruch 7, **dadurch gekennzeichnet, dass** es sich bei dem anorganischen Material um eine Verbindung der folgenden Stöchiometrie (LAGP) handelt:

$$Li_{1+x}Al_xGe_{2-x} (PO_4)_3$$

worin gilt: $x=0$ oder $x=0.2$ oder $x=0.4$.

13. Verfahren nach Anspruch 7, **dadurch gekennzeichnet, dass** es sich bei dem anorganischen Material um eine Verbindung der folgenden Stöchiometrie (LLTO) handelt:

$$Li_{3x}La_{(2/3)-x\square(1/3)-2x}TiO_3$$

worin gilt: $0 \leq x \leq 0.16$.

14. Verfahren nach einem der Ansprüche 8 bis 13, **dadurch gekennzeichnet, dass** die Flachmembran ausschließlich aus dem anorganischen Material besteht.

## Claims

1. Process for producing hydrogen and lithium hydroxide, comprising the following steps:

   a) providing a feed comprising at least water, Li ions and also impurities, the concentration of Li ions in the feed $C_F$ being at least 200 ppm by weight or between 500 ppm by weight and 140 000 ppm by weight, in each case based on the total weight of the feed;
   b) providing a poor working medium comprising water and lithium hydroxide dissolved therein, the concentration of lithium hydroxide in the poor working medium $C_{M0}$, based on the total weight of the poor working medium, being at least 50 ppm by weight;
   c) providing at least one electrochemical cell, wherein the electrochemical cell has the following properties:

   v. the electrochemical cell includes a first compartment in which an anode is arranged;
   vi. the electrochemical cell includes a second compartment in which a cathode is arranged;
   vii. the electrochemical cell includes a flat-sheet membrane that separates the first compartment from the second compartment, the flat-sheet membrane having the area $A$;
   viii. the flat-sheet membrane comprises an inorganic material that possesses conductivity for Li ions and that is electrically insulating;

   d) providing at least one electrical voltage source that is connected to the anode via a first electrical lead and to the cathode via a second electrical lead;
   e) continuous charging of the first compartment with the feed;

f) charging of the second compartment with the poor working medium;

g) charging of the electrochemical cell with an electrical voltage U drawn from the electrical voltage source such that an electrical current $I$ flows between the anode and cathode, the ratio Q of the current strength of the electrical current $I$ and the area A of the flat-sheet membrane being between 100 A/m$^2$ and 500 A/m$^2$ or between 150 A/m$^2$ and 350 A/m$^2$;

h) continuously withdrawing from the first compartment of wastewater comprising at least water, Li salts dissolved therein, oxygen and also impurities, the concentration of Li ions in the wastewater $C_W$, based on the total weight of the wastewater, being lower than the concentration of Li ions in the feed $C_F$;

i) withdrawing from the second compartment of a rich working medium comprising water and lithium hydroxide and also of hydrogen, the concentration of lithium hydroxide in the rich working medium $C_{M1}$, based on the total weight of the rich working medium, being greater than the concentration of lithium hydroxide in the poor working medium $C_{M0}$,

wherein, due to the continuous charging of the first compartment with the feed and due to the continuous withdrawal of wastewater from the first compartment, a first flow develops, which flows through the first compartment along the flat-sheet membrane with a crossflow velocity $CFV$, the crossflow velocity $CFV$ being greater than 220 mm/s or greater than 350 mm/s or greater than 470 mm/s, and wherein the crossflow velocity $CFV$ is lower than a limit velocity, the limit velocity being selected from the group consisting of the following limit velocities: 600 mm/s, 960 mm/s, 1500 mm/s, 2400 mm/s, 3780 mm/s and 6000 mm/s.

2. Process according to Claim 1, **characterized in that** the first compartment is free of flow internals.

3. Process according to Claim 2, **characterized in that** the first compartment is free of spacers.

4. Process according to any of Claims 1 to 3, **characterized in that** the flat-sheet membrane is fitted in a flat-sheet module.

5. Process according to any of Claims 1 to 4, **characterized in that** the feed contains anions selected from the group consisting of sulfate, carbonate, hydroxide and chloride.

6. Process according to any of Claims 1 to 5, **characterized in that** the feed contains impurities in the form of compounds of elements selected from the group consisting of B, Na, Mg, Al, Si, K, Ca, Mn, Fe, Co, Ni, Cu and C.

7. Process according to any of the preceding claims, wherein the inorganic material present in the flat-sheet membrane possesses a conductivity for Li ions, measured by the "impedance spectroscopy" method described herein, that at a temperature of 23°C is at least $1*10^{-5}$ S/m or at least $5*10^{-5}$ S/m or at least $10*10^{-5}$ S/m and not more than $100*10^{-5}$ S/m.

8. Process according to Claim 7, **characterized in that** the inorganic material is a compound of the following stoichiometry (LATP):

$$Li_{1+x}Al_xTi_{2-x}(PO_4)_3$$

in which: $0.1 \leq x \leq 0.3$, where preferably x = 0.3.

9. Process according to Claim 7, **characterized in that** the inorganic material is a compound of the following stoichiometry (LATSP):

$$Li_{1+x+y}Al_xTi_{2-x}Si_yP_{3-y}O_{12}$$

in which: $0.1 \leq x \leq 0.3$ and $0.2 \leq y \leq 0.4$.

10. Process according to Claim 7, **characterized in that** the inorganic material is a compound of the following stoichiometry (LAGTSP):

$$Li_{1+x+y}Al_xTi_{2-x}Si_yP_{3-y}O_{12} * nGeO_2$$

in which: $0 \leq x \leq 1$ and $0 \leq y \leq 1$ and $0 \leq n \leq 1$

11. Process according to Claim 7, **characterized in that** the inorganic material is a compound of the following stoichiometry (LAGTP):

$$Li_{1.4}Al_{0.4}(Ge_{1-x}Ti_x)_{1.6}(PO_4)_3$$

in which: $0 \leq x \leq 1$.

12. Process according to Claim 7, **characterized in that** the inorganic material is a compound of the following stoichiometry (LAGP):

$$Li_{1+x}Al_xGe_{2-x}(PO_4)_3$$

in which: $x = 0$ or $x = 0.2$ or $x = 0.4$.

13. Process according to Claim 7, **characterized in that** the inorganic material is a compound of the following stoichiometry (LLTO):

$$Li_{3x}La_{(2/3)-x\square(1/3)-2x}TiO_3$$

in which: $0 \leq x \leq 0.16$.

14. Process according to any of Claims 8 to 13, **characterized in that** the flat-sheet membrane consists entirely of the inorganic material.

**Revendications**

1. Procédé pour la production d'hydrogène et d'hydroxyde de lithium, comportant les étapes suivantes :

   a) disposition d'une charge contenant au moins de l'eau, des ions Li, ainsi que des impuretés, la concentration d'ions Li dans la charge $C_F$ étant d'au moins 200 ppm en poids ou entre 500 ppm en poids et 140 000 ppm en poids, chaque fois par rapport au poids total de la charge ;
   b) disposition d'un fluide de travail pauvre contenant de l'eau et de l'hydroxyde de lithium dissous dans celle-ci, la concentration d'hydroxyde de lithium dans le fluide de travail pauvre $C_{M0}$ étant d'au moins 50 ppm en poids par rapport au poids total du fluide de travail pauvre ;
   c) disposition d'au moins une cellule électrochimique, la cellule électrochimique présentant les caractéristiques suivantes :

      v. la cellule électrochimique comprend un premier compartiment, dans lequel est disposée une anode ;
      vi. la cellule électrochimique comprend un second compartiment, dans lequel est disposée une cathode ;
      vii. la cellule électrochimique comprend une membrane plate qui sépare le premier compartiment du second compartiment, la membrane plate présentant la surface A ;
      viii. la membrane plate contient une matière inorganique qui possède une conductivité pour les ions Li et qui est électriquement isolante ;

   d) disposition d'au moins une source de tension électrique, qui est reliée à l'anode par une première ligne électrique et à la cathode par une seconde ligne électrique ;
   e) alimentation en continu du premier compartiment avec la charge ;
   f) alimentation du second compartiment avec le fluide de travail pauvre ;
   g) alimentation de la cellule électrochimique avec une tension électrique U fournie par la source de tension électrique, de sorte qu'un courant électrique $I$ circule entre anode et cathode, le quotient Q de l'intensité de courant du courant électrique $I$ et de la surface A de la membrane plate étant compris entre 100 A/m$^2$ et 500 A/m$^2$ ou entre 150 A/m$^2$ et 350 A/m$^2$ ;
   h) décharge continue d'eau résiduaire contenant au moins de l'eau, des sels de Li dissous dans celle-ci, de l'oxygène, ainsi que des impuretés hors du premier compartiment, la concentration d'ions Li dans l'eau résiduaire $C_W$ par rapport au poids total de l'eau résiduaire étant plus faible que la concentration d'ions Li dans la charge $C_F$ ;
   i) décharge d'un fluide de travail riche contenant de l'eau et de l'hydroxyde de lithium ainsi que de l'hydrogène hors du second compartiment, la concentration d'hydroxyde de lithium dans le fluide de travail riche $C_{M1}$ par rapport au poids total du fluide de travail riche étant plus élevée que la concentration d'hydroxyde de lithium dans le fluide de travail pauvre $C_{M0}$ ;

dans lequel, par l'alimentation continue du premier compartiment avec la charge et par la décharge continue de l'eau résiduaire hors du premier compartiment, il se forme un premier courant qui s'écoule à une vitesse d'écoulement transversal *CFV* à travers le premier compartiment le long de la membrane plate, la vitesse d'écoulement transversal *CFV* étant supérieure à 220 mm/s ou supérieure à 350 mm/s ou supérieure à 470 mm/s, et la vitesse d'écoulement transversal *CFV* étant inférieure à une vitesse limite, la vitesse limite étant choisie dans le groupe constitué par les vitesses limites suivantes : 600 mm/s, 960 mm/s, 1 500 mm/s, 2 400 mm/s, 3 780 mm/s, 6 000 mm/s.

2. Procédé selon la revendication 1, **caractérisé en ce que** le premier compartiment est exempt d'inserts de guidage de flux.

3. Procédé selon la revendication 2, **caractérisé en ce que** le premier compartiment est exempt d'espaceurs.

4. Procédé selon l'une quelconque des revendications 1 à 3, **caractérisé en ce que** la membrane plate est insérée dans un module plat.

5. Procédé selon l'une quelconque des revendications 1 à 4, **caractérisé en ce que** la charge contient des anions qui sont choisis dans le groupe constitué par les anions sulfate, carbonate, hydroxyde, chlorure.

6. Procédé selon l'une quelconque des revendications 1 à 5, **caractérisé en ce que** la charge contient des impuretés sous forme de composés d'éléments qui sont choisis dans le groupe constitué par B, Na, Mg, Al, Si, K, Ca, Mn, Fe, Co, Ni, Cu, C.

7. Procédé selon l'une quelconque des revendications précédentes, dans lequel la matière inorganique contenue dans la membrane plate possède une conductivité pour les ions Li, mesurée selon la méthode « spectroscopie d'impédance » décrite dans le présent document, qui, à une température de 23 °C, est d'au moins $1*10^{-5}$ S/m ou d'au moins $5*10^{-5}$ S/m ou d'au moins $10*10^{-5}$ S/m et d'au maximum $100*10^{-5}$ S/m.

8. Procédé selon la revendication 7, **caractérisé en ce que** pour ce qui est de la matière inorganique il s'agit d'un composé de stœchiométrie suivante (LATP) :

$$Li_{1+x}Al_xTi_{2-x}(PO_4)_3$$

dans laquelle il s'applique que : $0,1 \leq x \leq 0,3$, x étant de préférence égal à 0,3.

9. Procédé selon la revendication 7, **caractérisé en ce que** pour ce qui est de la matière inorganique il s'agit d'un composé de stœchiométrie suivante (LATSP) :

$$Li_{1+x+y}Al_xTi_{2-x}Si_yP_{3-y}O_{12}$$

dans laquelle il s'applique que : $0,1 \leq x \leq 0,3$ et $0,2 \leq y \leq 0,4$.

10. Procédé selon la revendication 7, **caractérisé en ce que** pour ce qui est de la matière inorganique il s'agit d'un composé de stœchiométrie suivante (LAGTSP) :

$$Li_{1+x+y}Al_xTi_{2-x}Si_yP_{3-y}O_{12} * nGeO_2$$

dans laquelle il s'applique que : $0 \leq x \leq 1$ et $0 \leq y \leq 1$ et $0 \leq n \leq 1$.

11. Procédé selon la revendication 7, **caractérisé en ce que** pour ce qui est de la matière inorganique il s'agit d'un composé de stœchiométrie suivante (LAGTP) :

$$Li_{1,4}Al_{0,4}(Ge_{1-x}Ti_x)_{1,6}(PO_4)_3$$

dans laquelle il s'applique que : $0 \leq x \leq 1$.

**12.** Procédé selon la revendication 7, **caractérisé en ce que** pour ce qui est de la matière inorganique il s'agit d'un composé de stœchiométrie suivante (LAGP) :

$$Li_{1+x}Al_xGe_{2-x}(PO_4)_3$$

dans laquelle il s'applique que : x = 0 ou x = 0,2 ou x = 0,4.

**13.** Procédé selon la revendication 7, **caractérisé en ce que** pour ce qui est de la matière inorganique il s'agit d'un composé de stœchiométrie suivante (LLTO) :

$$Li_{3x}La_{(2/3)-x}\square_{(1/3)-2x}TiO_3$$

dans laquelle il s'applique que : $0 \leq x \leq 0,16$.

**14.** Procédé selon l'une quelconque des revendications 8 à 13, **caractérisé en ce que** la membrane plate est constituée exclusivement de la matière inorganique.

Fig. 1

Fig. 2

Fig.3

Fig.4

Fig.5

Fig.6

Fig.7

Fig.8

Fig.9

Fig.10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160201163 A1
- WO 2019055730 A1
- US 9222148 B2
- EP 3805428 A1
- US 10036094 B2
- DE 19709

**In der Beschreibung aufgeführte Nicht-Patentliteratur**

- Lithium and Lithium Compounds. **WIETELMANN, U.** ; **STEINBILD, M.** Encyclopedia of Industrial Chemistry. 2014
- **PANKAJ K. CHOUBEY et al.** Advance review on the exploitation of the prominent energystorage element Lithium. *Part II: From sea water and spent lithium ion batteries (LIBs), Minerals Engineering*, 2017, vol. 110, 104-121
- **PALAKKATHODI KAMMAMPATA et al.** Cruising in ceramics-discovering new structures for all-solid-state batteries-fundamentals, materials, and performances. *Ionics*, 2018, vol. 24, 639-660
- **YEDUKONDALU MEESALA et al.** Recent Advancements in Li-Ion Conductors for All-Solid-State Li-Ion Batteries. *ACS Energy Lett.*, 2017, vol. 2 (12), 2734-2751
- *Unravelling the effect of diboron trioxide, Journal of the European Ceramic Society*, 2022, vol. 42 (3), 1023-1032
- **EONGYU YI et al.** Materials that can replace liquid electrolytes in Li batteries: Superionic conductivities in Li1.7Al0.3Ti1.7Si0.4P2.6O12. Processing combustion synthesized nanopowders to free standing thin films. *Journal of Power Sources*, 2014, vol. 269, 577-588
- **ZHEN LI et al.** Continuous electrical pumping membrane process for seawater lithium mining. *Energy Environ. Sci.*, 2021, vol. 14, 3152
- **SIXIE YANG et al.** Lithium Metal Extraction from Seawater. *Joule*, 2018, vol. 2 (9), 1648-1651